# EUROPÄISCHE PATENTSCHRIFT

(11) **EP 3 227 751 B1**
(45) Veröffentlichungstag und Bekanntmachung des Hinweises auf die Patenterteilung: **29.01.2020**
(21) Anmeldenummer: 15804723.3
(22) Anmeldetag: 30.11.2015
(51) Int. Cl.: G02F 1/39, G02F 1/35, G02F 1/37, G02F 1/01

(54) **VORRICHTUNG UND VERFAHREN ZUM ERZEUGEN ELEKTROMAGNETISCHER STRAHLUNG**
APPARATUS AND METHOD FOR GENERATING ELECTROMAGNETIC RADIATION
DISPOSITIF ET PROCÉDÉ DE GÉNÉRATION DE RAYONNEMENT ÉLECTROMAGNÉTIQUE

(30) Priorität: 05.12.2014 DE 102014017931
(43) Veröffentlichungstag der Anmeldung: 11.10.2017
(73) Patentinhaber: Hübner GmbH & Co. KG, 34123 Kassel (DE)
(72) Erfinder: KIESSLLING, Jens, 79100 Freiburg (DE); BREUNIG, Ingo, 79110 Freiburg (DE); KÜHNEMANN, Frank, 79114 Freiburg (DE)
(74) Vertreter: WSL Patentanwälte Partnerschaft mbB
(86) Internationale Anmeldenummer: PCT/EP2015/078080
(87) Internationale Veröffentlichungsnummer: WO 2016/087380

(56) Entgegenhaltungen:
- US-A- 5 867 303
- HECKER A ET AL: "High resolution Doppler-free spectroscopy of molecular iodine using a continuous wave optical parametric oscillator", OPTICS COMMUNICATIONS, NORTH-HOLLAND PUBLISHING CO. AMSTERDAM, NL, Bd. 218, Nr. 1-3, 15. März 2003 (2003-03-15), Seiten 131-134, XP004413945, ISSN: 0030-4018, DOI: 10.1016/S0030-4018(03)01187-8
- K. REGELSKIS ET AL: "Efficient second-harmonic generation of a broadband radiation by control of the temperature distribution along a nonlinear crystal", OPTICS EXPRESS, Bd. 20, Nr. 27, 17. Dezember 2012 (2012-12-17), Seite 28544, XP055253290, ISSN: 2161-2072, DOI: 10.1364/OE.20.028544

## Beschreibung

Die vorliegende Erfindung betrifft eine Vorrichtung zum Erzeugen elektromagnetischer Strahlung mit einem Pumplaser, der so eingerichtet ist, dass er im Betrieb der Vorrichtung elektromagnetische Dauerstrich-Pumpstrahlung erzeugt, einem optisch parametrischen Oszillator, der einen nichtlinear optischen Kristall aufweist, wobei der optisch parametrische Oszillator in einem Strahlengang der Pumpstrahlung angeordnet ist, und wobei der optisch parametrische Oszillator so eingerichtet ist, dass er im Betrieb der Vorrichtung Signalstrahlung und Idlerstrahlung aus der Pumpstrahlung erzeugt, und einer nichtlinear optischen Einrichtung, die einen nichtlinear optischen Kristall aufweist, wobei die nichtlinear optische Einrichtung mindestens in einem Strahlengang der Signalstrahlung oder Idlerstrahlung angeordnet ist, und wobei die nichtlinear optische Einrichtung so eingerichtet ist, dass sie im Betrieb der Vorrichtung aus der Signalstrahlung oder Idlerstrahlung elektromagnetische Strahlung mit einer Frequenz erzeugt, die größer ist als eine Frequenz der Signalstrahlung oder Idlerstrahlung.

Die vorliegende Erfindung betrifft zudem ein Verfahren zum Erzeugen elektromagnetischer Strahlung mit den Schritten Erzeugen von elektromagnetischer Dauerstrich-Pumpstrahlung mit einem Pumplaser, Erzeugen von Signalstrahlung oder Idlerstrahlung aus der Pumpstrahlung in einem optisch parametrischen Oszillator, der einen nichtlinear optischen Kristall aufweist, und Erzeugen von elektromagnetische Strahlung mit einer Frequenz, die größer sein kann als eine Frequenz der Pumpstrahlung, aus der Signalstrahlung oder Idlerstrahlung in einer nichtlinear optischen Einrichtung, die einen nichtlinear optischen Kristall aufweist.

Viele Wellenlängenbereiche bzw. Frequenzbereiche elektromagnetischer Strahlung, die für wissenschaftliche und technische Anwendungen von Interesse sind, lassen sich nicht oder nur schwer direkt durch effiziente Laser erzeugen. Vielmehr müssen diese Wellenlängenbereiche durch nichtlinear optische Frequenzkonversion aus einer mit Hilfe eines Lasers erzeugten Pumpstrahlung generiert werden.

Ein weit verbreiteter Ansatz hierzu sind sogenannte optische parametrische Oszillatoren, in denen aus einer vorgegebenen, typischerweise festgelegten Pumpwellenlänge in der Wellenlänge abstimmbare Signalstrahlung und Idlerstrahlung erzeugt werden. In dem nichtlinear optischen Kristall wird dabei jeweils ein Photon der Pumpstrahlung auf zwei Photonen der Signalstrahlung und der Idlerstrahlung aufgeteilt, welche zusammen die Energie des Photons der Pumpstrahlung aufweisen. Daher ist es in diesem nichtlinear optischen Prozess nur möglich, Wellenlängen zu erzeugen, die größer sind als die Wellenlänge der verwendeten Pumpstrahlung.

Wellenlängen, die kürzer sind als die Wellenlänge der verwendeten Pumpstrahlung lassen sich erst in einem zweiten Schritt dadurch erzeugen, dass in einem weiteren nichtlinear optischen Kristall zum Beispiel eine Verdopplung der Frequenz der Signalstrahlung oder der Idlerstrahlung erfolgt, oder eine Summenfrequenzbildung aus der Pumpstrahlung und der Signalstrahlung oder Idlerstrahlung.

Beispielsweise wird in der wissenschaftlichen Publikation "High resolution Doppler-free spectroscopy of molecular iodine using a continous wave optical parametric oscillator" von A. Hecker et al. über die Anwendung eines optisch parametrischen Oszillators berichtet, der derart gestaltet ist, sodass eine hoher Frequenz-Stabilität und eine Variation in einem breiten Frequenzbereich ermöglicht wird.

Das US Patent 5,867,303 betrifft ein Verfahren zur Optimierung der Ausgangsleistung von Laserlicht aus einer nichtlinearen ferro-elektrischen optischen Einrichtung durch differentiell kontrollierbare Energiezufuhr zu der optischen Einrichtung entlang der Länge der optischen Einrichtung.

Dabei ist es das Ziel solcher Systeme, am Ende eines solchen zweistufigen Prozesses eine über einen weiten Wellenlängenbereich automatisiert abstimmbare elektromagnetische Strahlung in einem Wellenlängenbereich zu generieren, der mit Lasern nicht direkt zugänglich ist. Dies bedeutet unter anderem, dass keine manuellen Korrektur- und Nachjustierschritte im Betrieb erforderlich sein sollten. Solche Korrektur- und Justierschritte sind jedoch zum Beispiel notwendig, wenn zum Erreichen eines solch breiten Abstimmbereichs Verkippungen der nichtlinear optischen Kristalle zur Phasenanpassung erforderlich werden.

Im Sprachgebrauch der vorliegenden Anmeldung wird der optisch parametrische Oszillator als OPO abgekürzt, ein Frequenzverdoppler wird als SHG (engl. Second Harmonic Generation) abgekürzt und ein Summenfrequenzgenerator wird als SFG abgekürzt (engl. Sum Frequency Generation). SHG und SFG als alternative Beispiele zur Erzeugung von Frequenzen, die größer sind als die Frequenz der in dem OPO erzeugten Strahlung, werden zusammen mit dem Oberbegriff "nichtlinear optische Einrichtung" bezeichnet. Dabei ist diese genau genommen eine zusätzliche, zweite nichtlinear optische Einrichtung, da auch der OPO auf nichtlinear optischen Phänomenen beruht.

Ausgehend von dem Stand der Technik ist es Aufgabe der vorliegenden Erfindung, eine Vorrichtung zum Erzeugen elektromagnetischer Strahlung bereitzustellen, wobei die erzeugte Strahlung ohne Justieraufwand automatisiert über einen breiten Wellenlängenbereich abstimmbar ist.

Dazu gilt es, einen OPO bereitzustellen, der eine möglichst breitbandige und effiziente Erzeugung von Signalstrahlung und Idlerstrahlung aus der Pumpstrahlung ermöglicht.

Zudem ist es eine Aufgabe der vorliegenden Erfindung, eine Frequenzkonversion mit steuerbarer Konversionseffizienz in der nichtlinear optischen Einrichtung bereitzustellen, um auch die Leistung der am Ende als Nutzstrahlung aus der Vorrichtung zum Erzeugen elektromagnetischer Strahlung austretenden Strahlung zu optimieren.

Letztlich gilt es auch, den OPO und die nichtlinear optische Einrichtung aufeinander abzustimmen.

Zumindest eine der zuvor genannten Aufgaben wird durch eine Vorrichtung zum Erzeugen elektromagnetischer Strahlung gelöst mit einem Pumplaser, der so eingerichtet ist, dass er im Betrieb der Vorrichtung elektromagnetische Dauerstrich-Pumpstrahlung erzeugt, einem optisch parametrischen Oszillator, der einen nichtlinear optischen Kristall aufweist, wobei der optisch parametrische Oszillator in einem Strahlengang der Pumpstrahlung angeordnet ist, und wobei der optisch parametrische Oszillator so eingerichtet ist, dass er im Betrieb der Vorrichtung Signalstrahlung und Idlerstrahlung aus der Pumpstrahlung erzeugt, und einer nichtlinear optischen Einrichtung, die einen nichtlinear optischen Kristall aufweist, wobei die nichtlinear optische Einrichtung mindestens in einem Strahlengang der Signalstrahlung oder Idlerstrahlung angeordnet ist, und wobei die nichtlinear optische Einrichtung so eingerichtet ist, dass sie im Betrieb der Vorrichtung aus der Signalstrahlung oder Idlerstrahlung elektromagnetische Strahlung mit einer Frequenz erzeugt, die größer ist als die Frequenz der Signalstrahlung oder Idlerstrahlung, wobei der nichtlinear optische Kristall der nichtlinear optischen Einrichtung in einem Ofen angeordnet ist, der so ausgestaltet ist, dass er im Betrieb der Vorrichtung den Kristall derart beheizt, dass der Kristall in Strahlrichtung der Signalstrahlung oder Idlerstrahlung einen Temperaturgradienten aufweist. Die Vorrichtung weist dabei eine Steuerung auf, die mit dem Ofen verbunden und mit einem Temperatursensor verbunden ist, wobei der Temperatursensor so eingerichtet und angeordnet ist, dass er im Betrieb der Vorrichtung eine Temperatur des Kristalls des optisch parametrischen Oszillators erfasst und wobei die Steuerung so eingerichtet ist, dass sie den Temperaturgradienten des Kristalls der nichtlinear optischen Einrichtung in Abhängigkeit von der Temperatur des Kristalls des optisch parametrischen Oszillators steuert

Als Pumplaser werden in einer Ausführungsform der vorliegenden Erfindung ein diodengepumpter, frequenzverdoppelter Festkörperlaser, beispielsweise bei einer Wellenlänge von 532 nm, oder ein frequenzverdoppelter Faserlaser eingesetzt.

Bei der nichtlinear optischen Einrichtung handelt es sich um eine zusätzliche, von dem OPO zu unterscheidende Einrichtung der Vorrichtung. Diese dient dazu, die von dem OPO aus der Pumpstrahlung generierte Signalstrahlung oder Idlerstrahlung einer weiteren Frequenzkonversion zu unterziehen, sodass die Frequenz der daraus resultierenden elektromagnetischen Strahlung größer ist als die Frequenz der Signalstrahlung oder Idlerstrahlung aus dem OPO, und die vorzugsweise auch größer ist als die Frequenz der Pumpstrahlung, welche von dem Pumplaser emittiert wird.

Daher eignen sich als nichtlinear optische Einrichtung beispielsweise ein Frequenzverdoppler oder ein Summenfrequenzgenerator.

In einer Ausführungsform der Erfindung ist die nichtlinear optische Einrichtung ein Frequenzverdoppler, der einen nichtlinear optischen Kristall aufweist, wobei der Frequenzverdoppler in einem Strahlengang der Signalstrahlung oder Idlerstrahlung angeordnet ist, und wobei der Frequenzver-In der dazu alternativen Ausführungsform ist die nichtlinear optische Einrichtung ein Summenfrequenzgenerator, der einen nichtlinear optischen Kristall aufweist, wobei der Summenfrequenzgenerator in einem Strahlengang der Signalstrahlung oder Idlerstrahlung sowie in einem Strahlengang der Pumpstrahlung angeordnet ist, und wobei der Summenfrequenzgenerator so eingerichtet ist, dass er im Betrieb der Vorrichtung aus der Signalstrahlung oder Idlerstrahlung und der Pumpstrahlung elektromagnetische Strahlung mit einer Frequenz erzeugt, die gleich der Summe aus einer Frequenz der Signalstrahlung oder Idlerstrahlung und einer Frequenz der Pumpstrahlung ist.

Im Gegensatz zur SHG erfordert es die SFG, einen Teil der von dem Pumplaser generierten Pumpstrahlung abzuzweigen, bevor die Pumpstrahlung in den OPO eintritt, um mit diesem abgezweigten Anteil der Pumpstrahlung die SFG zu betreiben. Dafür wird gegebenenfalls hinter der SFG eine höhere Ausgangsleistung der erzeugten elektromagnetischen Strahlung zur Verfügung.

Alle in der vorliegenden Anmeldung für die nichtlinear optische Einrichtung diskutierten Aspekte betreffen, soweit nicht explizit anders angegeben, sowohl die SHG als auch die SFG.

Es versteht sich, dass die nichtlinear optische Einrichtung zumindest in einer Ausführungsform der Erfindung neben dem nichtlinear optischen Kristall einen Resonator aufweist, der so ausgestaltet ist, dass er resonant für die in dem OPO erzeugte Signalstrahlung oder Idlerstrahlung ist.

In einer Ausführungsform der Erfindung lässt sich die Wellenlänge der aus dem Resonator austretenden Signalstrahlung oder Idlerstrahlung aus dem OPO dadurch abstimmen, dass der nichtlinear optische Kristall des OPO in einem Ofen angeordnet ist, sodass sich die Temperatur, bei der sich der Kristall im Betrieb der Vorrichtung befindet, einstellen und auswählen lässt. Durch die Temperatur des Kristalls werden die Wellenlängen von Signalstrahlung und Idlerstrahlung bestimmt.

Es zeigt sich, dass die Ausgangsleistung von Signalstrahlung und Idlerstrahlung des OPO eine Funktion der Wellenlänge ist. Dabei nimmt die Leistung vereinfacht ausgedrückt mit zunehmender Wellenlänge ab. Daher gilt es, die Effizienz der Frequenzkonversion in der nichtlinear optischen Einrichtung (z.B. SHG oder SFG) an die Leistung der von dem OPO generierten Signalstrahlung oder Idlerstrahlung anzupassen.

In einer Ausführungsform erfolgt diese Anpassung derart, dass die Ausgangsleistung der nichtlinear optischen Einrichtung über einen möglichst großen Wellenlängenbereich hinweg möglichst konstant ist.

In einer weiteren Ausführungsform der Erfindung wird die Effizienz der Frequenzkonversion in der nichtlinear optischen Einrichtung so angepasst, dass für jede Wellenlänge der die nichtlinear optische Einrichtung pumpenden Signalstrahlung oder Idlerstrahlung ein stabiler Betrieb der nichtlinear optischen Einrichtung gewährleistet ist.

Ebenfalls ist es möglich, in einer Ausführungsform die Effizienz der Frequenzkonversion so anzupassen, dass die Ausgangsleistung der nichtlinear optischen Einrichtung für jede Wellenlänge der Signalstrahlung oder Idlerstrahlung maximal ist.

Die Konversionseffizienz der nichtlinear optischen Einrichtung hängt neben der Intensität der einfallenden Signalstrahlung oder Idlerstrahlung von der Phasenfehlanpassung in dem nichtlinear optischen Kristall der nichtlinear optischen Einrichtung ab. Die Phasenfehlanpassung ist eine Funktion der Temperatur des Kristalls. Dabei hat sich gezeigt, dass sich die Phasenfehlanpassung insbesondere bei der Verwendung von gepolten, nichtlinear optischen Kristallen dadurch gut einstellen lässt, dass der Kristall mit Hilfe eines Ofens derart geheizt wird, dass der Kristall in Strahlrichtung der Signalstrahlung oder Idlerstrahlung einen Temperaturgradienten aufweist. Durch das Steuern, d.h. die Wahl und Einstellung, des Temperaturgradienten zwischen den beiden Enden des Kristalls lässt sich einstellen, welche Teillänge des Kristalls effektiv zur Frequenzkonversion beiträgt. Die Einstellung bzw. Steuerung der Phasenfehlanpassung kann dabei wie oben ausgeführt verschiedene Optimierungsziele verfolgen.

In einer Ausführungsform der Erfindung weist daher die Vorrichtung zum Erzeugen elektromagnetischer Strahlung eine Steuerung auf, die mit dem Ofen des nichtlinear optischen Kristalls der nichtlinear optischen Einrichtung wirksam verbunden ist und die so eingerichtet ist, dass sie den Temperaturgradienten des Kristalls der nichtlinear optischen Einrichtung in Abhängigkeit von der Leistung und/oder der Wellenlänge der in den Kristall einfallenden Signalstrahlung oder Idlerstrahlung steuert.

Setzt man voraus, dass für einen gegebenen Aufbau die Ausgangsleistung der Signalstrahlung oder Idlerstrahlung des OPO für jede erreichbare Wellenlänge bekannt ist, so benötigt die Steuerung lediglich eine Information über die Wellenlänge, welche als Ausgangswellenlänge des OPO eingestellt ist, um den Ofen des Kristalls der nichtlinear optischen Einrichtung so einzustellen, dass sein Temperaturgradient die optimale Konversionseffizienz der SHG oder SFG bereitstellt.

Da die Abstimmung der Wellenlänge der von dem OPO erzeugten Signalstrahlung oder Idlerstrahlung mit Hilfe einer Temperatursteuerung des Kristalls des OPO erfolgt, ist dessen Temperatur ein unmittelbares Maß für die Wellenlänge der Signalstrahlung oder Idlerstrahlung, welche zur Frequenzkonversion in die nichtlinear optische Einrichtung eingespeist wird. Die Temperatur des Kristalls des OPO dient als Maß für die Wellenlänge der Signalstrahlung oder Idlerstrahlung und damit - Kenntnis des Systems vorausgesetzt - für die Leistung der Signalstrahlung oder Idlerstrahlung.

In einer weiteren Ausführungsform der Erfindung weist die Vorrichtung eine Steuerung auf, die mit dem Ofen verbunden ist, wobei der nichtlinear optische Kristall des optisch parametrischen Oszillators periodisch gepolt ist und wobei die Steuerung so eingerichtet ist, dass sie den Temperaturgradienten des Kristalls der nichtlinear optischen Einrichtung in Abhängigkeit von der Periodizität der Polung des nichtlinear optischen Kristalls des optisch parametrischen Oszillators steuert. Die Berücksichtigung der Periodizität der Polung des nichtlinear optischen Kristalls des OPO bei der Steuerung des Temperaturgradienten des nichtlinear optischen Kristalls der nichtlinear optischen Einrichtung ist deshalb vorteilhaft, da die Ausgangsleistung des OPO von der Periodizität des gepolten Kristalls abhängt.

In einer Ausführungsform der Erfindung wird der zu jeder Wellenlänge der Signalstrahlung oder Idlerstrahlung passende Wert für den Temperaturgradienten des Kristalls der nichtlinear optischen Einrichtung experimentell vorab bestimmt und eine Zuordnung zwischen der Wellenlänge der Signal- oder Idlerstrahlung zu dem jeweils passenden Temperaturgradienten in einer Nachschlagetabelle in der Steuerung oder einem dieser zugeordneten Speicher abgelegt. Steht dann in einer solchen Ausführungsform der Steuerung die Information über die Wellenlänge der Signalstrahlung oder Idlerstrahlung in irgendeiner geeigneten Form, beispielsweise in Form der Temperatur des Kristalls des OPO, zur Verfügung, so kann die Steuerung den Temperaturgradienten des nichtlinear optischen Kristalls der nichtlinear optischen Einrichtung einstellen.

In einer Ausführungsform der Erfindung weist die erfindungsgemäße Vorrichtung zudem eine Einrichtung zum Erfassen einer Wellenlänge oder Frequenz der Signalstrahlung oder Idlerstrahlung auf, wobei die Einrichtung zum Erfassen der Wellenlänge oder Frequenz mit der Steuerung verbunden ist.

In einer weiteren Ausführungsform der Erfindung ist die Steuerung mit einer Einrichtung zum Einstellen der Wellenlänge der von dem optisch parametrischen Oszillator erzeugten Signalstrahlung oder Idlerstrahlung verbunden, sodass im Betrieb der Vorrichtung eine Information über die Wellenlänge der Signalstrahlung oder Idlerstrahlung in der Steuerung vorliegt.

Ein Ofen zum Beheizen des nichtlinear optischen Kristalls der nichtlinear optischen Einrichtung, sodass der Kristall im Betrieb der Vorrichtung einen Temperaturgradienten in Strahlrichtung der Signalstrahlung oder Idlerstrahlung, vorzugsweise zwischen seinen Enden, aufweist, kann verschiedene Ausgestaltungen haben.

In einer Ausführungsform der Erfindung weist der Ofen ein erstes Heizelement und ein zweites Heizelement auf, wobei das erste Heizelement in Strahlrichtung der Signalstrahlung oder Idlerstrahlung an einem ersten Ende des Kristalls in thermischem Kontakt mit dem Kristall ist und die zweite Heizeinrichtung in Strahlrichtung an einem zweiten Ende des Kristalls mit dem Kristall in thermischem Kontakt ist.

In einer weiteren Ausführungsform der Erfindung weist der Ofen einen ersten und einen zweiten Temperaturfühler auf, wobei der erste und der zweite Temperaturfühler mit der Steuerung verbunden sind, wobei der erste Temperaturfühler so eingerichtet und angeordnet ist, dass er im Betrieb der Vorrichtung in Strahlrichtung der Signalstrahlung oder Idlerstrahlung die Temperatur des Kristalls an dem ersten Ende erfasst und wobei der zweite Temperaturfühler so eingerichtet und angeordnet ist, dass er im Betrieb der Vorrichtung in Strahlrichtung der Signalstrahlung oder Idlerstrahlung die Temperatur des Kristalls an einem zweiten Ende erfasst. Auf diese Weise lässt sich der Temperaturgradient des Kristalls der nichtlinear optischen Einrichtung nicht nur steuern bzw. einstellen, sondern regeln.

In einer Ausführungsform der Erfindung ist der optisch parametrische Oszillator einfach resonant ausgestaltet, d.h. er weist einen Resonator auf, der entweder die Signalstrahlung oder die Idlerstrahlung überhöht, d.h. für diese resonant ist. Dabei wird zweckmäßigerweise die jeweils nicht überhöhte Strahlung in die nachfolgende nichtlinear optische Einrichtung eingekoppelt.

Die Veränderbarkeit des Reflexionsvermögens bzw. Transmissionsvermögens eines Spiegels für die Signalstrahlung und die Idlerstrahlung in dem Resonator ermöglicht es in einer Ausführungsform, wahlweise in dem Resonator die Signalstrahlung oder die Idlerstrahlung resonant zu überhöhen. Auf diese Weise lässt sich durch Veränderbarkeit des Spiegels die Abstimmungsbandbreite des OPO weiter erhöhen.

In einer Ausführungsform der Erfindung weist der optisch parametrische Oszillator eine Mehrzahl von Spiegeln auf, wobei die Spiegel so angeordnet und ausgestaltet sind, dass sie einen Resonator für die Signalstrahlung bilden, wobei der Kristall in einem Strahlengang der Signalstrahlung und der Idlerstrahlung in dem Resonator angeordnet ist, und wobei einer der Spiegel ein veränderbarer Spiegel ist, der derart ausgestaltet ist, dass er auswählbar einstellbar entweder ein Reflexionsvermögen für die Signalstrahlung aufweist, das größer ist als das Reflexionsvermögen für die Idlerstrahlung und gleichzeitig ein Transmissionsvermögen für die Idlerstrahlung aufweist, das größer ist als das Transmissionsvermögen für die Signalstrahlung, oder ein Reflexionsvermögen für die Idlerstrahlung aufweist, das größer ist als das Reflexionsvermögen für die Signalstrahlung, und gleichzeitig Transmissionsvermögen für die Signalstrahlung aufweist, das größer ist als das Transmissionsvermögen für die Idlerstrahlung.

In einer Ausführungsform der Erfindung weist der veränderbare Spiegel einen ersten Abschnitt auf, der ein Reflexionsvermögen für die Signalstrahlung hat, das größer ist als das Reflexionsvermögen für die Idlerstrahlung und der gleichzeitig ein Transmissionsvermögen für die Idlerstrahlung hat, das größer ist als das Transmissionsvermögen für die Signalstrahlung, wobei der veränderbare Spiegel einen zweiten Abschnitt aufweist, der ein Reflexionsvermögen für die Idlerstrahlung hat, das größer ist als das Reflexionsvermögen für die Signalstrahlung, und der gleichzeitig ein Transmissionsvermögen für die Signalstrahlung hat, das größer ist als das Transmissionsvermögen für die Idlerstrahlung, wobei der Spiegel mechanisch so bewegbar ist, dass sich auswählbar entweder der erste Abschnitt oder der zweite Abschnitt des veränderbaren Spiegels im Strahlengang der Signalstrahlung und der Idlerstrahlung befindet.

Vorzugsweise sind beide Abschnitte in einer Ausführungsform der Erfindung auf dem gleichen Substrat angeordnet. In einer alternativen Ausführungsform der Erfindung können die beiden Abschnitte des veränderbaren Spiegels jedoch auf zwei voneinander getrennten Substraten realisiert sein.

Dabei kann der veränderbare Spiegel in einer Ausführungsform der Erfindung entlang einem linearen Weg derart, vorzugsweise von einem Aktuator angetrieben, bewegbar sein, dass sich auswählbar entweder der erste Abschnitt oder der zweite Abschnitt in dem Strahlengang der Signalstrahlung und der Idlerstrahlung befindet oder aber beispielsweise der veränderbare Spiegel um eine Drehachse drehbar oder verschwenkbar sein, sodass sich auswählbar entweder der erste Abschnitt oder der zweite Abschnitt in dem Strahlengang der Signalstrahlung und der Idlerstrahlung befindet.

Es versteht sich, dass in einer Ausführungsform der Erfindung die Strahlengänge von Signalstrahlung und Idlerstrahlung in dem Resonator des OPO und/oder in dem Resonator der nichtlinearen Einrichtung kollinear sind.

In einer Ausführungsform der Erfindung sind die nichtlinear optischen Kristalle des OPO und/oder der nichtlinear optischen Einrichtung periodisch gepolte Kristalle. Die Phasenanpassung für eine bestimmte Wellenlänge ist eine Funktion der Periode der Polung und der Temperatur.

In einer Ausführungsform der Erfindung sind in dem OPO und/oder der nichtlinear optischen Einrichtung mehrere Kristalle vorgesehen, die automatisiert und auswählbar alternativ in den Strahlengang eingefügt werden können, um die Abstimmungsbandbreite des OPO und/oder er nichtlinear optischen Einrichtung zu erhöhen.

In einer Ausführungsform der Erfindung weisen sowohl der OPO als auch die nichtlinear optische Einrichtung einen Resonator auf, wobei beide Resonatoren aktiv frequenzstabilisiert sind. Dabei erfolgt in einer Ausführungsform die Frequenzstabilisierung des Resonators des OPO auf eine externe Referenz und die Stabilisierung der Resonators der nichtlinear optischen Einrichtung erfolgt auf den Resonator des OPO.

Zur Frequenzstabilisierung zumindest eines der beiden Resonatoren wird in einer Ausführungsform der Erfindung das sogenannte Pound-Drever-Hall-Verfahren (siehe beispielsweise Applied Physics B, Band 31, S. 97 bis 105, 1983, R.W.P. Drever et al.: "Laser phase and frequency stabilization using an optical resonator") verwendet.

Dazu weisen in einer Ausführungsform der Erfindung der optisch parametrische Oszillator und die nichtlinear optische Einrichtung jeweils einen Resonator mit einer Mehrzahl von Spiegeln auf, wobei einer der Spiegel jedes der beiden Resonatoren durch einen Aktuator angetrieben bewegbar ist, sodass die Länge der beiden Resonatoren einstellbar und die Resonatoren stabilisierbar sind. Für diese Stabilisierung weist die Vorrichtung weiterhin eine Einrichtung zum Stabilisieren des Resonators des optisch parametrischen Oszillators und des Resonators der nichtlinearen optischen Einrichtung auf. Diese Einrichtung zum Stabilisieren umfasst einen zwischen den beiden Resonatoren angeordneten elektrooptischen Modulator im Strahlengang der Signalstrahlung oder der Idlerstrahlung, eine Signalquelle, die im Betrieb der Vorrichtung ein Referenzsignal mit einer Referenzfrequenz erzeugt, das in den elektrooptischen Modulator eingespeist wird, sodass im Betrieb der Vorrichtung der elektrooptische Modulator die Signalstrahlung oder Idlerstrahlung mit der Referenzfrequenz moduliert, wobei der Signalstrahlung oder Idlerstrahlung Seitenbänder aufgeprägt werden und wobei der Frequenzabstand zwischen der Signalstrahlung oder Idlerstrahlung und den Seitenbändern gleich der Referenzfrequenz ist, eine Einrichtung, die so eingerichtet und angeordnet ist, dass die im Betrieb der Vorrichtung einen Teil der Signalstrahlung oder Idlerstrahlung vor dem Resonator der nichtlinear optischen Einrichtung aus dem Strahlengang auskoppelt, eine Wellenlängenreferenz mit einer Resonanzwellenlänge, in die im Betrieb der Vorrichtung der ausgekoppelte Teil der Signalstrahlung oder Idlerstrahlung eingekoppelt wird, einen ersten Detektor, der derart angeordnet ist, dass er im Betrieb der Vorrichtung die Intensität der von der Wellenlängenreferenz reflektierten Signalstrahlung oder Idlerstrahlung oder der durch die Wellenlängenreferenz transmittierten Signalstrahlung oder Idlerstrahlung erfasst, wobei der erste Detektor ein erstes Detektorsignal ausgibt, einen ersten Mischer, in den im Betrieb der Vorrichtung das erste Detektorsignal und das Referenzsignal eingespeist werden und der das erste Detektorsignal mit dem Referenzsignal mischt und ein erstes Fehlersignal ausgibt, einen ersten Proportional-Differential-Integralregler, in den im Betrieb der Vorrichtung das erste Fehlersignal eingespeist wird und der aus dem ersten Fehlersignal ein erstes Regelsignal erzeugt, wobei im Betrieb der Vorrichtung das erste Regelsignal in den Aktuator eines Spiegels des Resonators des optisch parametrischen Oszillators eingespeist wird, sodass im Betrieb der Vorrichtung die Länge des Resonators des optisch-parametrischen Oszillators auf die Resonanzwellenlänge der Wellenlängenreferenz stabilisiert ist, eine Einrichtung, die so eingerichtet und angeordnet ist, dass sie im Betrieb der Vorrichtung einen Teil der in dem Resonator der nichtlinear optischen Einrichtung umlaufenden elektromagnetischen Strahlung auskoppelt, einen zweiten Detektor, der derart angeordnet ist, dass er im Betrieb der Vorrichtung die Intensität der aus dem Resonator der nichtlinear optischen Einrichtung ausgekoppelten elektromagnetischen Strahlung erfasst, wobei der zweite Detektor ein zweites Detektorsignal ausgibt, einen zweiten Mischer, in den im Betrieb der Vorrichtung das zweite Detektorsignal eingespeist wird, der das Detektorsignal mit dem Referenzsignal mischt und ein zweites Fehlersignal ausgibt, einen zweiten Proportional-Differential-Integral-Regler, in den im Betrieb der Vorrichtung das zweite Fehlersignal eingespeist wird und der aus dem zweiten Fehlersignal ein zweites Regelsignal erzeugt, wobei im Betrieb der Vorrichtung das zweite Regelsignal in den Aktuator eines Spiegels des Resonators der nichtlinear optischen Einrichtung eingespeist wird, sodass im Betrieb der Vorrichtung die Länge des Resonators der nichtlinear optischen Einrichtung auf die Resonanzwellenlänge des Resonators des optisch parametrischen Oszillators stabilisiert ist.

Eine derartige Stabilisierung reduziert den Einsatz von Komponenten. Sie erfordert nur einen einzigen Modulator sowie eine einzige Treiberelektronik für den Modulator und keine zusätzlichen optischen Komponenten.

In einer Ausführungsform der Erfindung ist die Einrichtung zum Auskoppeln der Signalstrahlung oder Idlerstrahlung zwischen den beiden Resonatoren ein Einkoppelspiegel des Resonators der nichtlinear optischen Einrichtung und zwar an seiner Außenseite außerhalb des eigentlichen Resonators.

In einer Ausführungsform der Erfindung ist die Einrichtung zum Auskoppeln der Signalstrahlung oder Idlerstrahlung zwischen den beiden Resonatoren ein Einkoppelspiegel des Resonators der nichtlinear optischen Einrichtung und zwar an seiner Außenseite außerhalb des eigentlichen Resonators.

Ebenso wird die Einrichtung zum Auskoppeln der im Resonator der nichtlinear optischen Einrichtung umlaufenden elektromagnetischen Strahlung in einer Ausführungsform von diesem Einkoppelspiegel des Resonators der nichtlinear optischen Einrichtung gebildet, dies jedoch auf seiner Innenseite, d.h. der für den Resonator reflektierenden Fläche. Die beiden auf diese Weise ausgekoppelten Strahlungen verlaufen nicht kollinear zueinander und können räumlich gut voneinander getrennt werden.

In einer Ausführungsform der Erfindung ist die Wellenlängenreferenz ein Referenzetalon, beispielsweise ein temperaturstabilisiertes Fabri-Perot-Etalon. Alternativ kann als Wellenlängenreferenz eine Gaszelle verwendet werden, die mit einem Gas gefüllt ist, das Absorptionslinien aufweist, auf welche sich der Resonator des optisch parametrischen Oszillators stabilisieren lässt.

Zumindest eine der zuvor genannten Aufgaben wird auch durch ein Verfahren zum Erzeugen elektromagnetischer Strahlung mit den Schritten: Erzeugen von elektromagnetische Dauerstrich-Pumpstrahlung mit einem Pumplaser, Erzeugen von Signalstrahlung oder Idlerstrahlung aus der Pumpstrahlung in einem optisch parametrischen Oszillator, der einen nichtlinear optischen Kristall aufweist, Erzeugen von elektromagnetische Strahlung mit einer Frequenz, die größer ist als eine Frequenz der Signalstrahlung oder Idlerstrahlung, aus der Signalstrahlung oder Idlerstrahlung in einer nichtlinear optischen Einrichtung, das einen nichtlinear optischen Kristall aufweist, Beheizen des nichtlinear optischen Kristalls der nichtlinear optischen Einrichtung in einem Ofen, so dass der Kristall in Strahlrichtung der Signalstrahlung oder Idlerstrahlung einen Temperaturgradienten aufweist und Steuern des Temperaturgradienten des Kristalls der nichtlinearen optischen Einrichtung mit einer Steuerung, die mit dem Ofen verbunden und mit einem Temperatursensor verbunden ist, wobei der Temperatursensor so eingerichtet und angeordnet ist, dass er im Betrieb der Vorrichtung eine Temperatur des Kristalls des optisch parametrischen Oszillators erfasst, in Abhängigkeit von der Temperatur des Kristalls des optisch parametrischen Oszillators.

Soweit zuvor Aspekte der Erfindung im Hinblick auf die Vorrichtung zum Erzeugen elektromagnetischer Strahlung beschrieben wurden, so gelten diese auch für das entsprechende Verfahren zum Erzeugen elektromagnetischer Strahlung und umgekehrt. Wenn das Verfahren mit einer Vorrichtung gemäß dieser Erfindung ausgeführt wird, so weist diese die entsprechenden Einrichtungen hierfür auf. Insbesondere sind Ausführungsformen der Vorrichtung zum Ausführen des erfindungsgemäßen Verfahrens geeignet.

Weitere Vorteile, Merkmale und Anwendungsmöglichkeiten der vorliegenden Erfindung werden anhand der folgenden Beschreibung einer Ausführungsform und der dazugehörigen Figuren deutlich.
- Figur 2: zeigt eine detaillierte Ansicht des Lasers und des optisch parametrischen Oszillators aus Figur 1.
- Figur 3: zeigt eine schematische Schnittansicht eines Ofens mit einem nichtlinear optischen Kristall aus dem Frequenzverdoppler aus Figur 1.
- Figur 4: zeigt eine Übersicht der Regelkreise zur Stabilisierung der Resonatoren der Anordnung aus Figur 1.
- Figur 5: zeigt eine detaillierter Ansicht des Frequenzverdopplers aus Figur 1.

In den Figuren sind identische Elemente mit identischen Bezugszeichen bezeichnet.

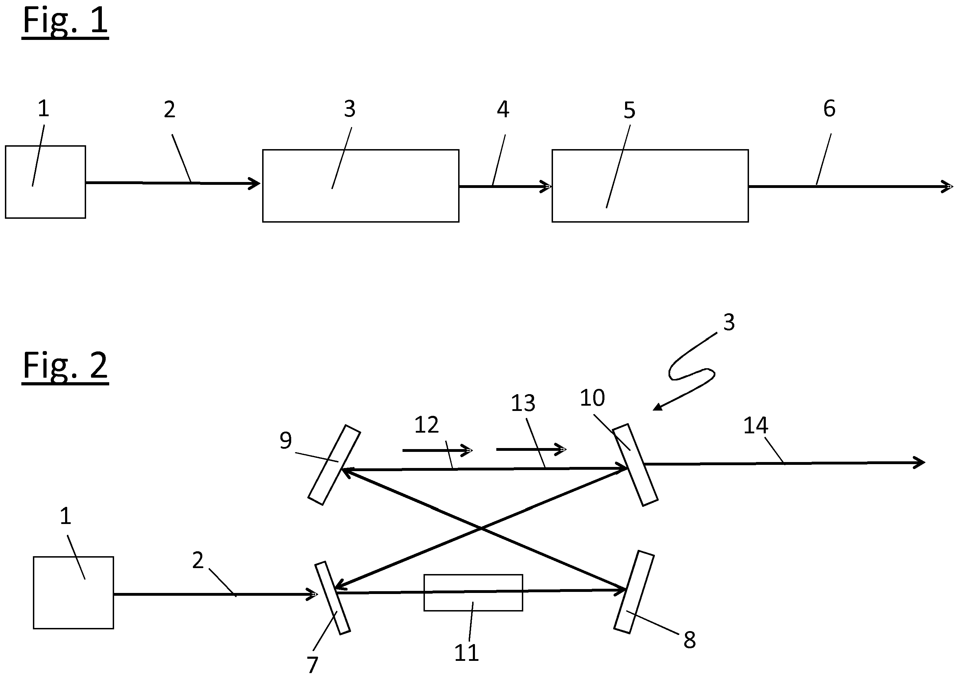

Die Vorrichtung zum Erzeugen abstimmbarer elektromagnetischer Strahlung besteht wie in Figur 1 gezeigt im Wesentlichen aus drei Komponenten. Dies sind ein Pumplaser 1, ein optisch parametrischer Oszillator 3 und ein Frequenzverdoppler 5 als nichtlinear optische Einrichtung im Sinne der vorliegenden Anmeldung.

In der hier diskutierten Ausführungsform ist der Laser 1 ein diodengepumpter frequenzverdoppelter Nd:YVO-Festkörperlaser. Dieser erzeugt eine elektromagnetische Dauerstrich-Pumpstrahlung 2 mit einer Wellenlänge von 532 nm. Diese Pumpstrahlung wird in den optisch parametrischen Oszillator 3 eingekoppelt. Die von dem optisch parametrischen Oszillator 3 generierte Signalstrahlung oder Idlerstrahlung 4 wiederum wird in einen Frequenzverdoppler 5 eingekoppelt.

Während es der optisch parametrische Oszillator 3 ermöglicht, kohärente elektromagnetische Strahlung 4 in einem abstimmbaren Wellenlängenbereich zu erzeugen, der oberhalb der Wellenlänge der Pumpstrahlung liegt, halbiert der Frequenzverdoppler 5 die Wellenlänge der Strahlung 4aus dem optisch parametrischen Oszillator 3.

In Figur 2 ist der optisch parametrische Oszillator 3 im Detail dargestellt, wobei auch der Pumplaser 1 sowie die in den optisch parametrischen Oszillator 3 eingekoppelte Dauerstrich-Pumpstrahlung 2 zu sehen sind. Der optisch parametrische Oszillator 3 hat eine Bowtie-Anordnung mit einem nichtlinear optischen Kristall 11 aus Lithiumniobat mit einer periodischen Polung mit einer einzigen Gitterperiode. Dabei ist der nichtlinear optische Kristall 11 in einem Ofen mit Temperaturstabilisierung angeordnet. Über die Wahl der Temperatur des Kristalls 11 kann die Wellenlänge der in dem optisch parametrischen Oszillator 3 erzeugten Signalstrahlung oder Idlerstrahlung 4 abgestimmt werden.

Der optisch parametrische Oszillator 3 ist einfach-resonant, d.h. er unterstützt auswählbar einstellbar nur eine Überhöhung oder Resonanz entweder der Signalstrahlung oder der Idlerstrahlung. Dazu sind die Spiegel 7, 8, 9 alle hochreflektierend in einem Wellenlängenbereich von 900 nm bis 1300 nm ausgestaltet. Auf diese Weise sind sie reflektierend sowohl für die in dem optisch parametrischen Oszillator 3 erzeugte Signalstrahlung als auch für die Idlerstrahlung. Die Spiegel 7, 8 sind zudem hochtransparent, d.h. sie besitzen ein geringes Reflexionsvermögen, für die Pumpwellenlänge von 532 nm.

Der Spiegel 10 ist ein veränderbarer Spiegel im Sinne der vorliegenden Anmeldung. Zu diesem Zweck ist der Spiegel linear und parallel zu sich selbst verschiebbar auf einem Aktuator angeordnet. Der Spiegel 10 selbst weist ein und demselben Substratzwei reflektierende Abschnitte auf. Der erste Abschnitt weist ein hohes Reflexionsvermögen in einem Wellenlängenbereich von 900 nm bis 1064 nm auf und gleichzeitig ein geringes Transmissionsvermögen in einem Wellenlängenbereich von 1064 nm bis 1300 nm. Demgegenüber hat der zweite Abschnitt des Spiegels ein hohes Transmissionsvermögen im Wellenlängenbereich von 900 nm bis 1064 nm und ein hohes Reflexionsvermögen für den Wellenlängenbereich von 1064 nm bis 1300 nm. In Abhängigkeit davon, ob der erste Abschnitt oder der zweite Abschnitt in den Strahlengang der Signalstrahlung und Idlerstrahlung eingeschoben sind, ist der Resonator des optisch parametrischen Oszillators 3 entweder resonant für die Signalstrahlung oder die Idlerstrahlung. Der Resonator des optisch parametrischen Oszillators 3 wird von den Spiegeln 7, 8, 9, 10 gebildet.

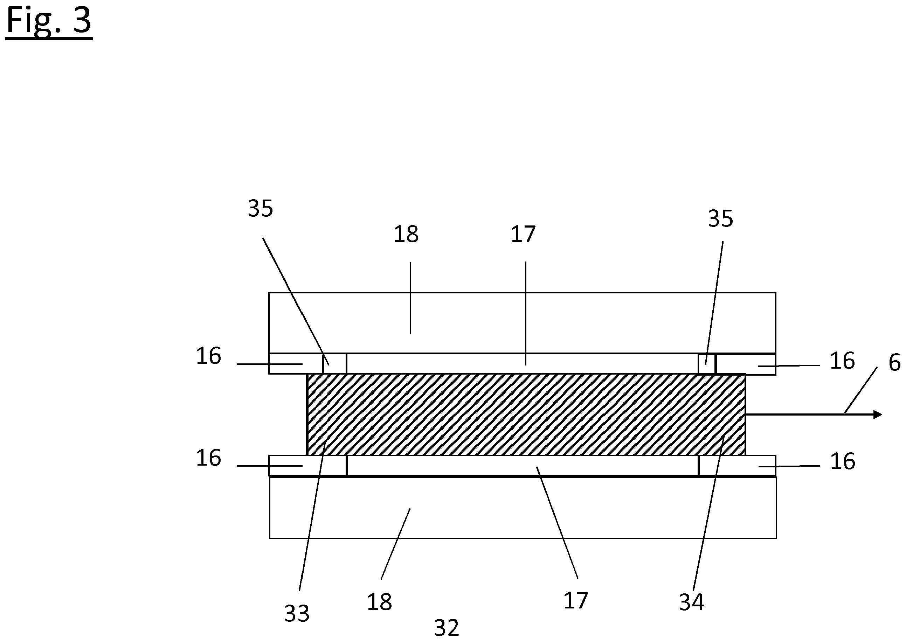

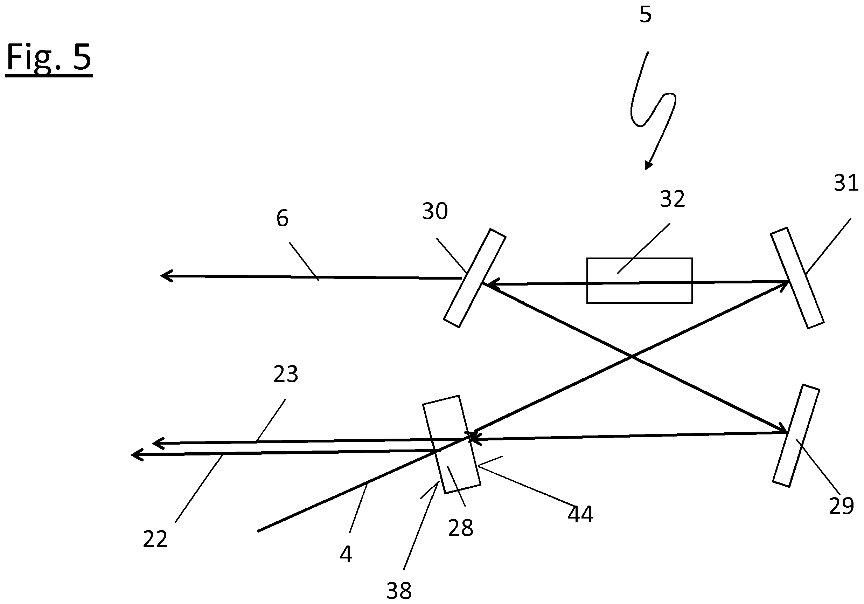

Die von dem optisch parametrischen Oszillator 3 nicht überhöht generierte Signalstrahlung oder Idlerstrahlung 4 wird in den Frequenzverdoppler 5 eingekoppelt, dessen Aufbau detailliert in Figur 5 gezeigt ist. Der Frequenzverdoppler 5 besteht aus einem Resonator mit vier Spiegeln 28, 29, 30, 31 sowie einem nichtlinear optischen Lithiumniobatkristall mit einer periodischen Polung mit einer einzigen Gitterperiode. Der Einkoppelspiegel 28 für den Frequenzverdoppler 5 ist teilweise transparent für den Wellenlängenbereich der Signalstrahlung oder Idlerstrahlung 4 von 900 nm bis 1300 nm. Die weiteren Resonatorspiegel 29, 30, 31 sind hochreflektierend für diesen Wellenlängenbereich von 900 nm bis 1300 nm, um die Resonanzbedingung für Signalstrahlung oder Idlerstrahlung zu erfüllen. Die Resonatorspiegel 29, 30, 31 weisen aber gleichzeitig ein hohes Transmissionsvermögen für die in dem nichtlinear optischen Kristall 32 erzeugte frequenzverdoppelte (bzw. wellenlängenhalbierte) elektromagnetische Strahlung 6 in einem Wellenlängenbereich von 450 nm bis 650 nm auf.
Der nichtlinear optische Kristall 32 ist in einem Ofen angeordnet, der im Detail in der Schnittansicht aus Figur 3 dargestellt ist. Dieser Ofen dient dazu, den nichtlinear optischen Kristall 32 derart zu erwärmen, dass er in Strahlrichtung der in dem Frequenzverdoppler 5 generierten Strahlung 6 von seinem ersten Ende 33 zu seinem zweiten Ende 34 einen Temperaturgradienten aufweist, wobei der Temperaturgradient mit Hilfe einer Steuerung (nicht gezeigt) auswählbar einstellbar ist.

Zu diesem Zweck verfügt der Ofen über je ein Heizelement 16 an seinem ersten Ende 33 und an seinem zweiten Ende 34. Werden diese Heizelemente 16 an den zwei Enden 33, 34 des Kristalls 32 auf unterschiedliche Temperaturen geheizt, so stellt sich ein Temperaturgradient über die Längsausdehnung des Kristalls 32 hinweg ein. Bei den Heizelementen 16 handelt es sich um Peltier-Elemente, die in thermischem Kontakt mit dem Kristall 32 sind. Zwischen den Heizelementen 16 am ersten und zweiten Ende 33, 34 sind Distanzstücke 17 vorgesehen, welche den Kristall in einem Abstand zu einer Isolierung 18 halten, die den Kristall 32 umgibt.

Zudem verfügt der Ofen an jedem der Enden 33, 34 des Kristalls 32 über einen Temperaturfühler 35. Dieser ist ebenfalls mit der Steuerung verbunden, sodass der Temperaturgradient über die Längsausdehnung des Kristalls 32 hinweg nicht nur steuerbar, sondern auch regelbar ist.

Über die Einstellung des Temperaturgradienten lässt sich die effektive Länge des Kristalls einstellen, über welche hinweg eine Phasenanpassung für eine gegebene Wellenlänge der die Frequenzverdopplung betreibenden Signalstrahlung oder Idlerstrahlung aus dem optisch parametrischen Oszillator 3 gegeben ist. Dazu verfügt die Steuerung über eine Schnittstelle, über die sie von einer Steuerung des optisch parametrischen Oszillators eine Information über die Wellenlänge der von dem optisch parametrischen Oszillator generierten und resonant überhöhten Signalstrahlung oder Idlerstrahlung erhält.

Diese Information liegt in diesem Beispiel in Form der Temperatur eines Temperierofens für den nichtlinear optischen Kristall 11 des optisch parametrischen Oszillators 3 vor. Die Temperatur des Kristalls 11 legt bei einer gegebenen Periodizität der Polung des Kristalls 11 die Wellenlänge der Signalstrahlung und Idlerstrahlung, die in dem optisch parametrischen Oszillator 3 generiert werden, fest. In Abhängigkeit von der Wellenlänge der erzeugten und an den Frequenzverdoppler 5 weitergeleiteten Signalstrahlung oder Idlerstrahlung sowie der Beschaffenheit des nichtlinearen Kristalls 32, d.h. insbesondere dessen Polungsperiodizität, kann dann eine zuvor empirisch festgestellte Zuordnung zu dem, die Konversionseffizienz des Frequenzverdopplers 5 optimierenden Temperaturgradienten erfolgen. Diesen Temperaturgradienten gilt es dann von der Steuerung einzuregeln.

Die Zuordnung zwischen der Temperatur des nichtlinear optischen Kristalls in dem optisch parametrischen Oszillator 3 und dem optimalen Temperaturgradienten des nichtlinear optischen Kristalls 32 des Frequenzverdopplers 5 ist in einer Nachschlagetabelle eines Speichers der Steuerung abgelegt. Die Werte hierfür wurden zuvor experimentell anhand des Systems durch Messung bestimmt.

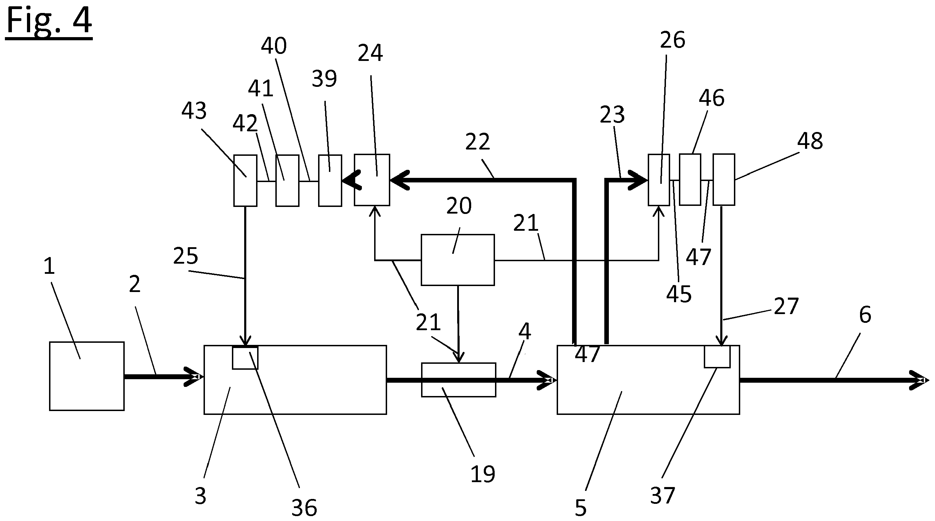

Figur 4 zeigt ergänzend eine Stabilisierung der beiden Resonatoren des optisch parametrischen Oszillators 3 und des Frequenzverdopplers 5, wobei der Resonator des optisch parametrischen Oszillators 3 auf eine Resonanzfrequenz eines externen Fabry-Perot-Etalons 24 stabilisiert wird und die Resonanzfrequenz des Resonators des Frequenzverdopplers 5 auf die Resonanzfrequenz des optisch parametrischen Oszillators 3 stabilisiert wird.

Um die Resonanzfrequenzen der beiden Resonatoren stabilisieren zu können, ist jeweils einer der Spiegel der Resonatoren auf einem Aktuator 36 bzw. 37 montiert, der eine automatisierte Längenänderung des Resonators und damit eine Regelung seiner Resonanzfrequenz ermöglicht. Zur Stabilisierung ist zwischen den Resonatoren des optisch parametrischen Oszillators 3 und des Frequenzverdopplers 5 ein elektrooptischer Modulator 19 auf Basis eines Lithiumniobat-Kristalls angeordnet, welcher die von dem optisch parametrischen Oszillator 3 erzeugte Signalstrahlung oder Idlerstrahlung mit einer Referenzfrequenz moduliert. Diese Referenzfrequenz wird von einer Signalquelle 20 erzeugt und liegt in der gezeigten Ausführungsform bei 2 MHz. Der Modulator 19 trägt damit der Signalstrahlung oder Idlerstrahlung 4 Seitenbänder auf, die zu der Mittenfrequenz einen Frequenzabstand aufweisen, der gleich der Referenzfrequenz des Referenzsignals 21 von 2 MHz ist. Zur Stabilisierung des Resonators des optisch parametrischen Oszillators 3 wird ein Teil 22 der modulierten Signalstrahlung oder Idlerstrahlung 4 vor dem Resonator des Frequenzverdopplers 5 abgezweigt. Dies erfolgt an einer Außenfläche 38 des Einkoppelspiegels 28 des Resonators des Frequenzverdopplers 5. Dies ist schematisch in Figur 5 zu sehen.

Dieser abgezweigte Teil 22 der Signalstrahlung oder Idlerstrahlung 4 wird in das temperaturstabilisierte Fabry-Perot-Etalon 24 eingestrahlt. Ein Rückreflex des Etalons 24 wird mit Hilfe eines ersten Detektors 39 erfasst und das Detektorsignal 40 wird auf einen Mischer 41 gegeben, welcher das Detektorsignal 40 mit dem Referenzsignal 21 mischt, sodass ein Fehlersignal 42 erzeugt wird. Dieses wiederum wird in einen ersten Proportional-Differential-Integralregler 43 eingespeist, der aus dem Fehlersignal ein Regelsignal 25 generiert, das zum Regeln des Aktuators 36 und damit zur Stabilisierung des Resonators des optisch parametrischen Oszillators 3 auf die Resonanzfrequenz des Etalons 24 verwendet wird.

Um eine Stabilisierung der Resonanzfrequenz des Resonators des Frequenzverdopplers 5 auf die Resonanzfrequenz des Resonators des optisch parametrischen Oszillators 3 bewirken zu können, wird zudem ein Teil der in dem Resonator des Frequenzverdopplers 5 umlaufenden elektromagnetischen Strahlung, d.h. der frequenzverdoppelten Strahlung 6, aus dem Resonator ausgekoppelt. Dies ist schematisch ebenfalls in Figur 5 dargestellt.

Zur Auskopplung der für die Stabilisierung des zweiten Resonators benötigten Strahlung 23 dient eine innere spiegelnde Fläche 44 des Einkoppelspiegels 28. Die ausgekoppelte Strahlung 23 ist eine Überlagerung des an dieser Fläche reflektierten Anteils der eintreffenden Strahlung mit der aus dem Resonator-Inneren austretenden Strahlung. Diese Strahlung wird auf einen Fotodetektor 26 gegeben, welcher ein zweites Detektorsignal 45 als Maß für die Intensität der ausgekoppelten Strahlung 23 erzeugt. Dieses zweite Detektorsignal 45 wird in einen zweiten Mischer 46 eingespeist, der das zweite Detektorsignal 45 mit dem Referenzsignal 21 mischt und ein zweites Fehlersignal 47 erzeugt. Dieses wiederum wird in einen zweiten Proportional-Differential-Integralregler 48 eingespeist, welcher aus dem Fehlersignal ein Regelsignal 27 generiert. Das Regelsignal 27 dient dazu, den Aktuator 37 und damit die Resonatorlänge des Resonators des Frequenzverdopplers 5 zu regeln und auf die Resonanzfrequenz des Resonators des optisch parametrischen Oszillators 3 zu stabilisieren.

Während die Erfindung im Detail in den Zeichnungen der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus.

### Bezugszeichenliste

- 1: Laser
- 2: Laserstrahl
- 3: optisch parametrischer Oszillator (OPO)
- 4: Signalstrahlung oder Idlerstrahlung
- 5: Frequenzverdoplpler (SHG)
- 6: frequenzverdoppelte Nutzstrahlung
- 7: Einkoppelspiegel
- 8,9: hochreflektierender Spiegel
- 10: Auskoppelspiegel
- 11: optisch-parametrischer Kristall
- 12: erzeugte Signalstrahlung
- 13: erzeugte Idlerstrahlung
- 16: Heizeinrichtung
- 17: Distanzstück
- 18: Isolierung
- 19: elektrooptischer Modulator (EOM)
- 20: Signalquelle für den EOM
- 21: Referenzsignal zum EOM
- 22: reflektierter Teilstrahl von der Außenfläche 38 des Spiegels 28
- 23: reflektierter Teilstrahl von der Innenfläche 44 des Spiegels 28
- 24: Fabry-Perot-Etalon
- 25: Regelsignal für die Stabilisierung des OPO-Resonators
- 26: zweiter Detektor für den zweiten Teilstrahl 23
- 27: Regelsignal für den SHG-Resonator
- 28: Einkoppelspiegel
- 29, 30: hochreflektierender Spiegel
- 31: hochreflektierender Spiegel
- 32: nichtlinear optischer Kristall des SHG
- 33: erstes Ende des Kristalls 32
- 34: zweites Ende des Kristalls 32
- 35: Temperaturfühler
- 36, 37: Aktuator
- 38: Außenfläche des Spiegels 28
- 39: erster Detektor
- 40: erstes Detektorsignal
- 41: erster Mischer
- 42: erstes Fehlersignal
- 43: erster Proportional-Differential-Integralregler
- 44: Innenfläche des Spiegels 28
- 45: zweites Detektorsignal
- 46: zweiter Mischer
- 47: zweites Fehlersignal
- 48: zweiter Proportional-Differential-Integralregler

## Patentansprüche

1. Vorrichtung zum Erzeugen elektromagnetischer Strahlung (6) mit
einem Pumplaser (1), der so eingerichtet ist, dass er im Betrieb der Vorrichtung elektromagnetische Dauerstrich-Pumpstrahlung (2) erzeugt,
einem optisch parametrischen Oszillator (3), der einen nichtlinear optischen Kristall (11) aufweist, wobei der optisch parametrische Oszillator (3) in einem Strahlengang der Pumpstrahlung (2) angeordnet ist, und wobei der optisch parametrische Oszillator (3) so eingerichtet ist, dass er im Betrieb der Vorrichtung Signalstrahlung (4) und Idlerstrahlung (4) aus der Pumpstrahlung (2) erzeugt, und
einer nichtlinear optischen Einrichtung (5), die einen nichtlinear optischen Kristall (32) aufweist, wobei die nichtlinear optische Einrichtung (5) mindestens in einem Strahlengang der Signalstrahlung (4) oder Idlerstrahlung (4) angeordnet ist, und wobei die nichtlinear optische Einrichtung (5) so eingerichtet ist, dass sie im Betrieb der Vorrichtung aus der Signalstrahlung (4) oder Idlerstrahlung (4) elektromagnetische Strahlung (6) mit einer Frequenz erzeugt, die größer ist als eine Frequenz der Signalstrahlung (4) oder Idlerstrahlung (4),
**dadurch gekennzeichnet, dass**
der nichtlinear optische Kristall (32) der nichtlinear optischen Einrichtung (5) in einem Ofen (16) angeordnet ist, der so ausgestaltet ist, dass er im Betrieb der Vorrichtung den Kristall (32) derart beheizt, dass der Kristall (32) in Strahlrichtung der Signalstrahlung (4) oder Idlerstrahlung (4) einen Temperaturgradienten aufweist und
die Vorrichtung eine Steuerung aufweist, die mit dem Ofen (16) verbunden und mit einem Temperatursensor verbunden ist, wobei der Temperatursensor so eingerichtet und angeordnet ist, dass er im Betrieb der Vorrichtung eine Temperatur des Kristalls (11) des optisch parametrischen Oszillators (3) erfasst, und wobei die Steuerung so eingerichtet ist, dass sie den Temperaturgradienten des Kristalls (32) der nichtlinear optischen Einrichtung (5) in Abhängigkeit von der Temperatur des Kristalls (11) des optisch parametrischen Oszillators (3) steuert.

2. Vorrichtung nach dem vorhergehenden Anspruch, **dadurch gekennzeichnet, dass** sie eine Steuerung aufweist, die mit dem Ofen (16) verbunden ist und die so eingerichtet ist, dass sie den Temperaturgradienten des Kristalls (32) der nichtlinear optischen Einrichtung (5) in Abhängigkeit von der Leistung und/oder der Wellenlänge der in den Kristall (32) einfallenden Signalstrahlung (4) oder Idlerstrahlung (4) steuert.

3. Vorrichtung nach einem der vorhergehenden Ansprüche, **dadurch gekennzeichnet, dass** sie eine Steuerung aufweist, die mit dem Ofen (16) verbunden ist, wobei der nichtlinear optische Kristall (11) des optisch parametrischen Oszillators (3) periodisch gepolt ist und wobei die Steuerung so eingerichtet ist, dass sie den Temperaturgradienten (35) des Kristalls der nichtlinear optischen Einrichtung in Abhängigkeit von der Periodizität der Polung des nichtlinear optischen Kristalls (32) des optisch parametrischen Oszillators (3) steuert.

4. Vorrichtung nach einem Ansprüche 1 bis 3, **dadurch gekennzeichnet, dass** sie eine Einrichtung zum Erfassen einer Wellenlänge oder Frequenz der Signalstrahlung (4) oder Idlerstrahlung (4) aufweist, wobei die Einrichtung mit der Steuerung verbunden ist.

5. Vorrichtung nach einem der 1 bis 4, **dadurch gekennzeichnet, dass** die Steuerung mit einer Einrichtung zum Einstellen der Wellenlänge der von dem optisch parametrischen Oszillator (3) erzeugten Signalstrahlung (4) oder Idlerstrahlung (4) verbunden ist, so dass im Betrieb der Vorrichtung eine Information über die Wellenlänge der Signalstrahlung (4) oder Idlerstrahlung (4) in der Steuerung vorliegt.

6. Vorrichtung nach einem der vorhergehenden Ansprüche, **dadurch gekennzeichnet, dass** der Ofen ein erstes Heizelement (16) und ein zweites Heizelement (16) aufweist, wobei das erste Heizelement (16) in Strahlrichtung der Signalstrahlung (4) oder Idlerstrahlung (4) an einem ersten Ende (33) des Kristalls (32) in thermischem Kontakt mit dem Kristall (32) ist und die zweite Heizeinrichtung (16) in Strahlrichtung an einem zweiten Ende (34) des Kristalls (32) mit dem Kristall (32) in thermischem Kontakt ist.

7. Vorrichtung nach einem der vorhergehenden Ansprüche, **dadurch gekennzeichnet, dass** der Ofen einen ersten Temperaturfühler (35) und einen zweiten Temperaturfühler (35) aufweist, wobei der erste und der zweite Temperaturfühler (35) mit der Steuerung verbunden sind, wobei der erste Temperaturfühler (35) so eingerichtet und angeordnet ist, dass er im Betrieb der Vorrichtung in Strahlrichtung der Signalstrahlung (4) oder Idlerstrahlung (4) die Temperatur des Kristalls (32) an einem ersten Ende (33) erfasst und wobei der zweite Temperaturfühler (35) so eingerichtet und angeordnet ist, dass er im Betrieb der Vorrichtung in Strahlrichtung der Signalstrahlung (4) oder Idlerstrahlung (4) die Temperatur des Kristalls (32) an einem zweiten Ende (34) erfasst.

8. Vorrichtung nach einem der vorhergehenden Ansprüche, **dadurch gekennzeichnet, dass** die nichtlinear optische Einrichtung (5) einen Resonator mit einer Mehrzahl von Spiegeln (28, 29, 30, 31) aufweist, wobei der nichtlinear optische Kristall (32) in dem Resonator angeordnet ist und wobei der Resonator für die Wellenlänge der in dem optisch parametrischen Oszillator erzeugten Signalstrahlung (4) oder Idlerstrahlung (4) resonant ist.

9. Vorrichtung nach einem der vorhergehenden Ansprüche, **dadurch gekennzeichnet, dass** die nichtlinear optische Einrichtung entweder ein Frequenzverdoppler (5) ist, der einen nichtlinear optischen Kristall (32) aufweist, wobei der Frequenzverdoppler (5) in einem Strahlengang der Signalstrahlung (4) oder Idlerstrahlung (4) angeordnet ist, und wobei der Frequenzverdoppler (5) so eingerichtet ist, dass er im Betrieb der Vorrichtung aus der Signalstrahlung (4) oder Idlerstrahlung (4) elektromagnetische Strahlung (6) mit der doppelten Frequenz einer Frequenz der Signalstrahlung (4) oder Idlerstrahlung (4) erzeugt oder ein Summenfrequenzgenerator ist, der einen nichtlinear optischen Kristall aufweist, wobei der Summenfrequenzgenerator in einem Strahlengang der Signalstrahlung (4) oder Idlerstrahlung (4) sowie in einem Strahlengang der Pumpstrahlung angeordnet ist, und wobei der Summenfrequenzgenerator so eingerichtet ist, dass er im Betrieb der Vorrichtung aus der Signalstrahlung (4) oder Idlerstrahlung (4) und der Pumpstrahlung elektromagnetische Strahlung mit einer Frequenz erzeugt, die gleich der Summe aus einer Frequenz der Signalstrahlung (4) oder Idlerstrahlung (4) und einer Frequenz der Pumpstrahlung ist.

10. Vorrichtung nach einem der vorhergehenden Ansprüche, **dadurch gekennzeichnet, dass** der optisch parametrische Oszillator (3) eine Mehrzahl von Spiegeln (7, 8, 9, 10) aufweist, wobei die Spiegel so angeordnet und ausgestaltet sind, dass sie auswählbar einstellbar einen Resonator für die Signalstrahlung (4) oder für die Idlerstrahlung (4) bilden, wobei der Kristall (11) in einem Strahlengang der Signalstrahlung (4) und der Idlerstrahlung (4) in dem Resonator angeordnet ist und wobei einer der Spiegel (10) ein veränderbarer Spiegel ist, der derart ausgestaltet ist, dass er auswählbar einstellbar entweder ein Reflexionsvermögen für die Signalstrahlung (4) aufweist, das größer ist als das Reflexionsvermögen für die Idlerstrahlung (4) und gleichzeitig ein Transmissionsvermögen für die Idlerstrahlung (4) aufweist, das größer ist als das Transmissionsvermögen für die Signalstrahlung (4), oder ein Reflexionsvermögen für die Idlerstrahlung (4) aufweist, das größer ist als das Reflexionsvermögen für die Signalstrahlung (4), und gleichzeitig Transmissionsvermögen für die Signalstrahlung (4) aufweist, das größer ist als das Transmissionsvermögen für die Idlerstrahlung (4).

11. Vorrichtung nach dem vorhergehenden Anspruch, **dadurch gekennzeichnet, dass** der veränderbare Spiegel (10) einen ersten Abschnitt aufweist, der ein Reflexionsvermögen für die Signalstrahlung (4) hat, das größer ist als das Reflexionsvermögen für die Idlerstrahlung (4) und der gleichzeitig ein Transmissionsvermögen für die Idlerstrahlung (4) hat, das größer ist als das Transmissionsvermögen für die Signalstrahlung (4), und dass der veränderbare Spiegel (10) einen zweiten Abschnitt aufweist, der ein Reflexionsvermögen für die Idlerstrahlung (4) hat, das größer ist als das Reflexionsvermögen für die Signalstrahlung (4), und der gleichzeitig ein Transmissionsvermögen für die Signalstrahlung (4) hat, das größer ist als das Transmissionsvermögen für die Idlerstrahlung (4), wobei der Spiegel (10) mechanisch so bewegbar ist, dass sich auswählbar entweder der erste Abschnitt oder der zweite Abschnitt des veränderbaren Spiegels (10) im Strahlengang der Signalstrahlung (4) und der Idlerstrahlung (4) befindet.

12. Vorrichtung nach dem vorhergehenden Anspruch, **dadurch gekennzeichnet, dass** der veränderbare Spiegel (10) entlang einem linearen Weg derart bewegbar ist, dass sich auswählbar entweder der erste Abschnitt oder der zweite Abschnitt in dem Strahlengang der Signalstrahlung (4) und der Idlerstrahlung (4) befindet oder dass der veränderbare Spiegel um eine Drehachse drehbar oder verschwenkbar ist, so dass sich auswählbar entweder der erste Abschnitt oder der zweite Abschnitt in dem Strahlengang der Signalstrahlung (4) und Idlerstrahlung (4) befindet.

13. Vorrichtung nach einem der vorhergehenden Ansprüche, **dadurch gekennzeichnet, dass**
der optisch parametrische Oszillator (3) und die nichtlinear optische Einrichtung (5) jeweils einen Resonator mit einer Mehrzahl von Spiegeln aufweisen,
wobei einer der Spiegel jedes der beiden Resonatoren durch einen Aktuator (36, 37) angetrieben bewegbar ist, so dass die Längen der beiden Resonatoren einstellbar sind, wobei die Vorrichtung weiterhin eine Einrichtung zum Stabilisieren des Resonators des optisch parametrischen Oszillators (3) und des Resonators der nichtlinearen optischen Einrichtung aufweist mit
einem zwischen den beiden Resonatoren angeordneten elektrooptischen Modulator (19) im Strahlengang der Signalstrahlung (4) oder der Idlerstrahlung (4),
einer Signalquelle (20), die im Betrieb der Vorrichtung ein Referenzsignal (21) mit einer Referenzfrequenz erzeugt, das in den elektrooptischen Modulator (19) eingespeist wird, so dass im Betrieb der Vorrichtung der elektrooptische Modulator (19) die Signalstrahlung (4) oder Idlerstrahlung (4) mit der Referenzfrequenz moduliert, wobei der Signalstrahlung (4) oder Idlerstrahlung (4) Seitenbänder aufgeprägt werden und wobei der Frequenzabstand zwischen der Signalstrahlung (4) oder Idlerstrahlung (4) und den Seitenbändern gleich der Referenzfrequenz ist,
einer Einrichtung (38), die so eingerichtet und angeordnet ist, dass sie im Betrieb der Vorrichtung einen Teil (22) der Signalstrahlung (4) oder Idlerstrahlung (4) vor dem Resonator der nichtlinear optischen Einrichtung (5) aus dem Strahlengang auskoppelt,
einer Wellenlängenreferenz (24) mit einer Resonanzwellenlänge, in die im Betrieb der Vorrichtung der ausgekoppelte Teil (22) der Signalstrahlung (4) oder Idlerstrahlung (4) eingekoppelt wird,
einem ersten Detektor (39), der derart angeordnet ist, dass er im Betrieb der Vorrichtung die Intensität der von der Wellenlängenreferenz (24) reflektierten Signalstrahlung (4) oder Idlerstrahlung (4) oder der durch die Wellenlängenreferenz (24) transmittierten Signalstrahlung (4) oder Idlerstrahlung (4) erfasst, wobei der erste Detektor (39) ein erstes Detektorsignal (40) ausgibt,
einem ersten Mischer (41), in den im Betrieb der Vorrichtung das erste Detektorsignal (40) und das Referenzsignal (21) eingespeist werden und der das erste Detektorsignal (40) mit dem Referenzsignal (21) mischt und ein erstes Fehlersignal (42) ausgibt,
einem ersten Proportional-Differential-Integral-Regler (43), in den im Betrieb der Vorrichtung das erste Fehlersignal (42) eingespeist wird und der aus dem ersten Fehlersignal (42) ein erstes Regelsignal (25) erzeugt,
wobei im Betrieb der Vorrichtung das erste Regelsignal (25) in den Aktuator (36) eines Spiegels des Resonators des optisch parametrischen Oszillators (3) eingespeist wird, so dass im Betrieb der Vorrichtung die Länge des Resonators des optisch parametrischen Oszillators (3) auf die Resonanzwellenlänge der Wellenlängenreferenz (24) stabilisiert ist, einer Einrichtung (44), die so eingerichtet und angeordnet ist, dass sie im Betrieb der Vorrichtung einen Teil (23) der in dem Resonator der nichtlinear optischen Einrichtung(5) umlaufenden elektromagnetischen Strahlung auskoppelt,
einem zweiten Detektor (26), der derart angeordnet ist, dass er im Betrieb der Vorrichtung die Intensität der aus dem Resonator der nichtlinear optischen Einrichtung (5) ausgekoppelten elektromagnetischen Strahlung (23) erfasst, wobei der zweite Detektor (26) ein zweites Detektorsignal (45) ausgibt,
einem zweiten Mischer (46), in den im Betrieb der Vorrichtung das zweite Detektorsignal (45) eingespeist wird, der das zweite Detektorsignal (45) mit dem Referenzsignal (21) mischt und ein zweites Fehlersignal (47) ausgibt,
einem zweiten Proportional-Differential-Integral-Regler (48), in den im Betrieb der Vorrichtung das zweite Fehlersignal (47) eingespeist wird und der aus dem zweiten Fehlersignal (47) ein zweites Regelsignal (27) erzeugt,
wobei im Betrieb der Vorrichtung das zweite Regelsignal (27) in den Aktuator (37) eines Spiegels des Resonators der nichtlinear optischen Einrichtung (5) eingespeist wird, so dass im Betrieb der Vorrichtung die Länge des Resonators der nichtlinear optischen Einrichtung (5) auf die Resonanzwellenlänge des Resonators des optisch parametrischen Oszillators (3) stabilisiert ist.

14. Verfahren zum Erzeugen elektromagnetischer Strahlung mit den Schritten
Erzeugen von elektromagnetische Dauerstrich-Pumpstrahlung (2) mit einem Pumplaser (1),
Erzeugen von Signalstrahlung (4) oder Idlerstrahlung (4) aus der Pumpstrahlung (1) in einem optisch parametrischen Oszillator (3), der einen nichtlinear optischen Kristall (11) aufweist,
und
Erzeugen von elektromagnetische Strahlung (6) mit einer Frequenz, die größer ist als eine Frequenz der Signalstrahlung (4) oder Idlerstrahlung (4), aus der Signalstrahlung (4) oder Idlerstrahlung (4) in einer nichtlinear optischen Einrichtung (5), die einen nichtlinear optischen Kristall (32) aufweist,
**dadurch gekennzeichnet, dass**
das Verfahren weiterhin die Schritte aufweist
Beheizen des nichtlinear optischen Kristalls (32) der nichtlinear optischen Einrichtung (5) in einem Ofen, so dass der Kristall (32) in Strahlrichtung der Signalstrahlung (4) oder Idlerstrahlung (4) einen Temperaturgradienten aufweist und
Steuern des Temperaturgradienten des Kristalls (32) der nichtlinear optischen Einrichtung (5) mit einer Steuerung, die mit dem Ofen (16) verbunden und mit einem Temperatursensor verbunden ist, wobei der Temperatursensor so eingerichtet und angeordnet ist, dass er im Betrieb der Vorrichtung eine Temperatur des Kristalls (11) des optisch parametrischen Oszillators (3) erfasst, in Abhängigkeit von der Temperatur des Kristalls (11) des optisch parametrischen Oszillators (3).

## Claims

1. Apparatus for generating electromagnetic radiation (6) comprising
a pump laser (1) so adapted that in operation of the apparatus it generates electromagnetic continuous-wave pump radiation (2),
an optical parametric oscillator (3) having a non-linear optical crystal (11), wherein the optical parametric oscillator (3) is arranged in a beam path of the pump radiation (2), and wherein the optical parametric oscillator (3) is so adapted that in operation of the apparatus it generates signal radiation (4) and idler radiation (4) from the pump radiation (2), and
a non-linear optical device (5) having a non-linear optical crystal (32), wherein the non-linear optical device (5) is arranged at least in a beam path of the signal radiation (4) or idler radiation (4), wherein the non-linear optical device (5) is so adapted that in operation of the apparatus it generates from the signal radiation (4) or idler radiation (4) electromagnetic radiation (6) at a frequency greater than a frequency of the signal radiation (4) or idler radiation (4),
**characterised in that**
the non-linear optical crystal (32) of the non-linear optical device (5) is arranged in a furnace (16) which is so designed that in operation of the apparatus it heats the crystal (32) in such a way that the crystal (32) has a temperature gradient in the beam direction of the signal radiation (4) or idler radiation (4), and
the apparatus has a control means which is connected to the furnace (16) and is connected to a temperature sensor, wherein the temperature sensor is so arranged and adapted that in operation of the apparatus it detects a temperature of the crystal (11) of the optical parametric oscillator (3) and wherein the control means is so adapted that it controls the temperature gradient of the crystal (32) of the non-linear optical device (5) in dependence on the temperature of the crystal (11) of the optical parametric oscillator (3).

2. Apparatus according to the preceding claim **characterised in that** it has a control means which is connected to the furnace (16) and so adapted that it controls the temperature gradient of the crystal (32) of the non-linear optical device (5) in dependence on the power and/or the wavelength of the signal radiation (4) or idler radiation (4) incident in the crystal (32).

3. Apparatus according to one of the preceding claims **characterised in that** it has a control means which is connected to the furnace (16), wherein the non-linear optical crystal (11) of the optical parametric oscillator (3) is periodically poled and wherein the control means is so adapted that it controls the temperature gradient (35) of the crystal of the non-linear optical device in dependence on the periodicity of the poling of the non-linear optical crystal (32) of the optical parametric oscillator (3).

4. Apparatus according to one of claims 1 to 3 **characterised in that** it has a device for detecting a wavelength or frequency of the signal radiation (4) or idler radiation (4), the device being connected to the control means.

5. Apparatus according to one of claims 1 to 4 **characterised in that** the control means is connected to a device for adjusting the wavelength of the signal radiation (4) or idler radiation (4) generated by the optical parametric oscillator (3) in such a way that in operation of the apparatus information about the wavelength of the signal radiation (4) or idler radiation (4) is present in the control means.

6. Apparatus according to one of the preceding claims **characterised in that** the furnace has a first heating element (16) and a second heating element (16) wherein the first heating element (16) is in thermal contact with the crystal (32) at a first end (33) of the crystal (32) in the beam direction of the signal radiation (4) or idler radiation (4) and the second heating device (16) is in thermal contact with the crystal (32) at a second end (34) of the crystal (32) in the beam direction.

7. Apparatus according to one of the preceding claims **characterised in that** the furnace has a first temperature probe (35) and a second temperature probe (35), wherein the first and second temperature probes (35) are connected to the control means, wherein the first temperature probe (35) is so arranged and adapted that in operation of the apparatus it detects the temperature of the crystal (32) at a first end (33) in the beam direction of the signal radiation (4) or idler radiation (4) and wherein the second temperature probe (35) is so arranged and adapted that in operation of the apparatus it detects the temperature of the crystal (32) at a second end (34) in the beam direction of the signal radiation (4) or idler radiation (4).

8. Apparatus according to one of the preceding claims **characterised in that** the non-linear optical device (5) has a resonator having a plurality of mirrors (28, 29, 30, 31), wherein the non-linear optical crystal (32) is arranged in the resonator and wherein the resonator is resonant for the wavelength of the signal radiation (4) or idler radiation (4) generated in the optical parametric oscillator.

9. Apparatus according to one of the preceding claims **characterised in that** the non-linear optical device has either a frequency doubler (5) which has a non-linear optical crystal (32), wherein the frequency doubler (5) is arranged in a beam path of the signal radiation (4) or idler radiation (4) and wherein the frequency doubler (5) is so adapted that in operation of the apparatus it generates from the signal radiation (4) or idler radiation (4) electromagnetic radiation (6) at double the frequency of a frequency of the signal radiation (4) or idler radiation (4) or a sum frequency generator having a non-linear optical crystal, wherein the sum frequency generator is arranged in a beam path of the signal radiation (4) or idler radiation (4) and in a beam path of the pump radiation, and wherein the sum frequency generator is so adapted that in operation of the apparatus it generates from the signal radiation (4) or idler radiation (4) and the pump radiation electromagnetic radiation at a frequency equal to the sum of a frequency of the signal radiation (4) or idler radiation (4) and a frequency of the pump radiation.

10. Apparatus according to one of the preceding claims **characterised in that** the optical parametric oscillator (3) has a plurality of mirrors (7, 8, 9, 10), wherein the mirrors are so arranged and adapted that they selectively adjustably form a resonator for the signal radiation (4) or for the idler radiation (4), wherein the crystal (11) is arranged in a beam path of the signal radiation (4) and the idler radiation (4) in the resonator and wherein one of the mirrors (10) is a variable mirror so adapted that it selectively adjustably has either a reflection capability for the signal radiation (4) greater than the reflection capability for the idler radiation (4) and at the same time has a transmission capability for the idler radiation (4) greater than the transmission capability for the signal radiation (4) or a reflection capability for the idler radiation (4) greater than the reflection capability for the signal radiation (4) and at the same time transmission capability for the signal radiation (4) greater than the transmission capability for the idler radiation (4).

11. Apparatus according to the preceding claim **characterised in that** the variable mirror (10) has a first portion which has a reflection capability for the signal radiation (4), that is greater than the refection capability for idler radiation (4) and at the same time a transmission capability for the idler radiation (4), that is greater than the transmission capability for the signal radiation (4), and the variable mirror (10) has a second portion having a reflection capability for the idler radiation (4), that is greater than the reflection capability for the signal radiation (4) and at the same time has a transmission capability for the signal radiation (4), that is greater than the transmission capability for the idler radiation (4), wherein the mirror (10) is mechanically moveable in such a way that either the first portion or the second portion of the variable mirror (10) is selectively disposed in the beam path of the signal radiation (4) and the idler radiation (4).

12. Apparatus according to the preceding claim **characterised in that** the variable mirror (10) is moveable along a linear path in such a way that either the first portion or the second portion is disposed selectively in the beam path of the signal radiation (4) and the idler radiation (4) or that the variable mirror is pivotable or rotatable about an axis of rotation in such a way that either the first portion or the second portion is disposed selectively in the beam path of the signal radiation (4) and idler radiation (4).

13. Apparatus according to one of the preceding claims **characterised in that** the optical parametric oscillator (3) and the non-linear optical device (5) respectively have a resonator having a plurality of mirrors,
wherein one of the mirrors of each of the two resonators is moveable in driven relationship by an actuator (36, 37) so that the lengths of the two resonators are adjustable,
wherein the apparatus further has a device for stablising the resonator of the optical parametric oscillator (3) and the resonator of the non-linear optical device, comprising an electrooptical modulator (19) arranged between the two resonators in the beam path of the signal radiation (4) or the idler radiation (4),
a signal source (20) which in operation of the apparatus produces a reference signal (21) having a reference frequency, that is fed into the electrooptical modulator (19) such that in operation of the apparatus the electrooptical modulator (19) modulates the signal radiation (4) or idler radiation (4) at the resonance frequency, wherein sidebands are impressed on the signal radiation (4) or idler radiation (4) and wherein the frequency spacing between the signal radiation (4) or idler radiation (4) and the sidebands is equal to the reference frequency,
a device (38) so arranged and adapted that in operation of the apparatus it couples a part (22) of the signal radiation (4) or idler radiation (4) out of the beam path upstream of the resonator of the non-linear optical device (5),
a wavelength reference (24) having a resonance wavelength into which in operation of the apparatus the coupled-out part (22) of the signal radiation (4) or idler radiation (4) is coupled,
a first detector (39) so arranged that in operation of the apparatus it detects the intensity of the signal radiation (4) or idler radiation (4) reflected by the wavelength reference (24) or the signal radiation (4) or idler radiation (4) transmitted by the wavelength reference (24), the first detector (39) outputting a first detector signal (40),
a first mixer (41) into which in operation of the apparatus the first detector signal (40) and the reference signal (21) are fed and which mixes the first detector signal (40) with the reference signal (21) and outputs a first error signal (42),
a first proportional-differential-integral controller (43) into which in operation of the apparatus the first error signal (42) is fed and which produces a first control signal (25) from the first error signal (42),
wherein in operation of the apparatus the first control signal (25) is fed into the actuator (36) of a mirror of the resonator of the optical parametric oscillator (3) so that in operation of the apparatus the length of the resonator of the optical parametric oscillator (3) is stablised to the resonance wavelength of the wavelength reference (24),
a device (44) so arranged and adapted that in operation of the apparatus it couples out a part (23) of the electromagnetic radiation circulating in the resonator of the non-linear optical device (5),
a second detector (26) so arranged that in operation of the apparatus it detects the intensity of the electromagnetic radiation (23) coupled out of the resonator of the non-linear optical device (5), the second detector (26) outputting a second detector signal (45),
a second mixer (46) into which in operation of the apparatus the second detector signal (45) is fed, that mixes the second detector signal (45) with the reference signal (21) and outputs a second error signal (47),
a second proportional-differential-integral controller (48) into which in operation of the apparatus the second error signal (47) is fed and which produces a second control signal (27) from the second error signal (47),
wherein in operation of the apparatus the second control signal (27) is fed into the actuator (37) of a mirror of the resonator of the non-linear optical device (5) so that in operation of the apparatus the length of the resonator of the non-linear optical device (5) is stablised to the resonance wavelength of the resonator of the optical parametric oscillator (3).

14. A method of generating electromagnetic radiation comprising the steps:
generating electromagnetic continuous-wave pump radiation (2) with a pump laser (1),
generating signal radiation (4) or idler radiation (4) from the pump radiation (1) in an optical parametric oscillator (3) having a non-linear optical crystal (11), and
generating electromagnetic radiation (6) at a frequency greater than a frequency of the signal radiation (4) or idler radiation (4) from the signal radiation (4) or idler radiation (4) in a non-linear optical device (5) having a non-linear optical crystal (32),
**characterised in that**
the method further includes the step:
heating the non-linear optical crystal (32) of the non-linear optical device (5) in a furnace so that the crystal (32) has a temperature gradient in the beam direction of the signal radiation (4) or idler radiation (4), and
controlling the temperature gradient of the crystal (32) of the non-linear optical device (5) with a control means which is connected to the furnace (16) and is connected to a temperature sensor, wherein the temperature sensor is so arranged and adapted that in operation of the apparatus it detects a temperature of the crystal (11) of the optical parametric oscillator (3), in dependence on the temperature of the crystal (11) of the optical parametric oscillator (3).

## Revendications

1. Dispositif pour engendrer du rayonnement électromagnétique (6), avec
un laser de pompage (1) qui est agencé de façon telle que, lors du fonctionnement du dispositif, il engendre un rayonnement de pompage électromagnétique continu (2),
un oscillateur paramétrique optique (3) qui comprend un cristal optique non linéaire (11), l'oscillateur paramétrique optique (3) étant disposé sur une trajectoire de faisceau du rayonnement de pompage (2) et l'oscillateur paramétrique optique (3) étant agencé de façon telle que, lors du fonctionnement du dispositif, il engendre, à partir du rayonnement de pompage (2), un rayonnement de signal (4) et un rayonnement idler (4), et
un dispositif optique non linéaire (5) qui comprend un cristal optique non linéaire (32), le dispositif optique non linéaire (5) étant disposé au moins sur une trajectoire de faisceau du rayonnement de signal (4) ou du rayonnement idler (4), et le dispositif optique non linéaire (5) étant agencé de façon telle que, lors du fonctionnement du dispositif, il engendre, à partir du rayonnement de signal (4) ou du rayonnement idler (4), un rayonnement électromagnétique (6) ayant une fréquence qui est supérieure à la fréquence du rayonnement de signal (4) ou du rayonnement idler (4),
**caractérisé en ce que**
le cristal optique non linéaire (32) du dispositif optique non linéaire (5) est disposé dans un four (16) qui est configuré de façon telle que, lors du fonctionnement du dispositif, il chauffe le cristal (32) de façon telle que le cristal (32) présente un gradient de température dans la direction de faisceau du rayonnement de signal (4) ou du rayonnement idler (4), et
le dispositif comprend une commande qui est reliée au four (16) et reliée à un capteur de température, le capteur de température étant agencé et disposé de façon telle que, lors du fonctionnement du dispositif, il capte une température du cristal (11) de l'oscillateur paramétrique optique (3) et la commande étant agencée de façon telle qu'elle commande le gradient de température du cristal (32) du dispositif optique non linéaire (5) en fonction de la température du cristal (11) de l'oscillateur paramétrique optique (3).

2. Dispositif selon la revendication précédente, **caractérisé en ce qu'**il comprend une commande qui est reliée au four (16) et qui est agencée de façon telle qu'elle commande le gradient de température du cristal (32) du dispositif optique non linéaire (5) en fonction de la puissance et/ou de la longueur d'onde du rayonnement de signal (4) ou du rayonnement idler (4) incident dans le cristal (32).

3. Dispositif selon une des revendications précédentes, **caractérisé en ce qu'**il comprend une commande qui est reliée au four (16), le cristal optique non linéaire (11) de l'oscillateur paramétrique optique (3) étant polarisé de manière périodique et la commande étant agencée de façon telle qu'elle commande le gradient de température (35) du cristal du dispositif optique non linéaire en fonction de la périodicité de la polarisation du cristal optique non linéaire (32) de l'oscillateur paramétrique optique (3).

4. Dispositif selon l'une des revendications 1 à 3, **caractérisé en ce qu'**il comprend un dispositif pour saisir une longueur d'onde ou une fréquence du rayonnement de signal (4) ou du rayonnement idler (4), le dispositif étant relié à la commande.

5. Dispositif selon l'une des revendications 1 à 4, **caractérisé en ce que** la commande est reliée à un dispositif pour le réglage de la longueur d'onde du rayonnement de signal (4) ou du rayonnement idler (4) engendré par l'oscillateur paramétrique optique (3) si bien que, lors du fonctionnement du dispositif, une information sur la longueur d'onde du rayonnement de signal (4) ou du rayonnement idler (4) soit disponible dans la commande.

6. Dispositif selon l'une des revendications précédentes, **caractérisé en ce que** le four comprend un premier élément chauffant (16) et un deuxième élément chauffant (16), le premier élément chauffant (16) dans la direction de rayonnement du rayonnement de signal (4) ou du rayonnement idler (4) étant en contact thermique avec le cristal (32) à une première extrémité (33) du cristal (32) et le deuxième dispositif chauffant (16) dans la direction de rayonnement étant en contact thermique avec le cristal (32) à une deuxième extrémité (34) du cristal (32).

7. Dispositif selon l'une des revendications précédentes, **caractérisé en ce que** le four comprend un premier capteur de température (35) et un deuxième capteur de température (35), le premier et le deuxième capteur de température (35) étant reliés à la commande, le premier capteur de température (35) étant agencé et disposé de façon telle que, lors du fonctionnement du dispositif, dans la direction de rayonnement du rayonnement du signal (4) ou du rayonnement idler (4), il capte la température du cristal (32) à une première extrémité (33), le deuxième capteur de température (35) étant agencé et disposé de façon telle que, lors du fonctionnement du dispositif, dans la direction de rayonnement du rayonnement de signal (4) ou du rayonnement idler (4), il capte la température du cristal (32) à une deuxième extrémité (34).

8. Dispositif selon l'une des revendications précédentes, **caractérisé en ce que** le dispositif optique non linéaire (5) comprend un résonateur avec une pluralité de miroirs (28, 29, 30, 31), le cristal optique non linéaire (32) étant disposé dans le résonateur et le résonateur étant résonant pour la longueur d'onde du rayonnement de signal (4) ou du rayonnement idler (4) engendré dans l'oscillateur paramétrique optique.

9. Dispositif selon l'une des revendications précédentes, **caractérisé en ce que** le dispositif optique non linéaire est ou bien un doubleur de fréquence (5) qui comprend un cristal optique non linéaire (32), le doubleur de fréquence (5) étant disposé sur une trajectoire de faisceau du rayonnement de signal (4) ou du rayonnement idler (4) et le doubleur de fréquence (5) étant agencé de façon telle que, lors du fonctionnement du dispositif, il produit, à partir du rayonnement de signal (4) ou du rayonnement idler (4), un rayonnement électromagnétique (6) avec une fréquence double d'une fréquence de rayonnement de signal (4) ou de rayonnement idler (4), ou bien un générateur de fréquence somme qui comprend un cristal optique non linéaire, le générateur de fréquence somme étant disposé sur une trajectoire de faisceau du rayonnement de signal (4) ou du rayonnement idler (4) ainsi que sur une trajectoire de faisceau du rayonnement de pompage, et le générateur de fréquence somme étant agencé de façon telle que, lors du fonctionnement du dispositif un rayonnement, il produit, à partir du rayonnement de signal (4) ou du rayonnement idler (4) et du rayonnement de pompage, un rayonnement électromagnétique ayant une fréquence qui est égale à la somme d'une fréquence du rayonnement de signal (4) ou du rayonnement idler (4) et d'une fréquence du rayonnement de pompage.

10. Dispositif selon l'une des revendications précédentes, **caractérisé en ce que** l'oscillateur paramétrique optique (3) comprend une pluralité de miroirs (7, 8, 9, 10), les miroirs étant disposés et configurés de façon telle qu'ils forment, de manière sélectionnable réglable, un résonateur pour le rayonnement de signal (4) ou le rayonnement idler (4), le cristal (11) étant disposé sur une trajectoire de faisceau du rayonnement de signal (4) et du rayonnement idler (4) dans le résonateur et un des miroirs (10) étant un miroir variable qui est configuré de façon telle que, de manière sélectionnable réglable, soit il présente une capacité de réflexion pour le rayonnement de signal (4) qui est supérieure à la capacité de réflexion pour le rayonnement idler (4) et, en même temps, il présente une capacité de transmission pour le rayonnement idler (4) qui est supérieure à la capacité de transmission pour le rayonnement de signal, soit il présente une capacité de réflexion pour le rayonnement idler (4) qui est supérieure à la capacité de réflexion pour le rayonnement de signal (4) et, en même temps, il présente une capacité de transmission pour le rayonnement de signal (4) qui est supérieure à la capacité de transmission pour le rayonnement idler (4).

11. Dispositif selon la revendication précédente, **caractérisé en ce que** le miroir variable (10) comprend une première partie qui présente une capacité de réflexion pour le rayonnement de signal (4) qui est supérieure à la capacité de réflexion pour le rayonnement idler (4) et qui présente en même temps une capacité de transmission pour le rayonnement idler (4) qui est supérieure à la capacité de transmission pour le rayonnement de signal (4), et **en ce que** le miroir variable (10) comprend une deuxième partie qui présente une capacité de réflexion pour le rayonnement idler (4) qui est supérieure à la capacité de réflexion pour le rayonnement de signal (4) et qui présente en même temps une capacité de transmission pour le rayonnement de signal (4) qui est supérieure à la capacité de transmission pour le rayonnement idler (4), le miroir (10) étant mécaniquement mobile de façon telle que, de façon sélectionnable, soit la première partie soit la deuxième partie du miroir (10) variable soit située sur la trajectoire de faisceau du rayonnement de signal (4) et du rayon idler (4).

12. Dispositif selon la revendication, **caractérisé en ce que** le miroir variable (10) est mobile le long d'une trajectoire linéaire de façon telle que, de façon sélectionnable, ou la première partie ou la deuxième partie soit située sur la trajectoire de faisceau du rayonnement de signal (4) et du rayonnement idler (4), ou que le miroir variable soit rotatif ou pivotant autour d'un axe de rotation, si bien que, de façon sélectionnable, ou la première partie ou la deuxième partie soit située sur la trajectoire de faisceau du rayonnement de signal (4) ou du rayonnement idler (4).

13. Dispositif selon l'une des revendications précédentes, **caractérisé en ce que** l'oscillateur paramétrique optique (3) et le dispositif optique non linéaire (5) comprennent chacun un résonateur avec une pluralité de miroirs,
un des miroirs de chacun des deux résonateurs étant mobile par entraînement à l'aide d'un actionneur (36, 37), si bien que les longueurs des deux résonateurs soient réglables,
le dispositif comprenant en outre un dispositif pour stabiliser le résonateur de l'oscillateur paramétrique optique (3) et le résonateur du dispositif optique non linéaire, avec
un modulateur électrooptique (19) disposé entre les deux résonateurs sur la trajectoire de faisceau du rayonnement de signal (4) ou du rayonnement idler (4),
une source de signal (20) qui, lors du fonctionnement du dispositif, engendre un signal de référence (21) ayant une fréquence de référence qui est injecté dans le modulateur électrooptique (19), si bien que, lors du fonctionnement du dispositif, le modulateur électrooptique (19) module le rayonnement de signal (4) ou le rayonnement idler (4) avec la fréquence de référence, des bandes latérales étant alors imprimées sur le rayonnement de signal (4) ou le rayonnement idler (4) et la différence de fréquence entre le rayonnement de signal (4) ou le rayonnement idler (4) et les bandes latérales étant égale à la fréquence de référence,
un dispositif (38) qui est agencé et disposé de façon telle que, lors du fonctionnement du dispositif, une partie (22) du rayonnement de signal (4) ou du rayonnement idler (4) est sortie de la trajectoire de faisceau avant le résonateur du dispositif optique non linéaire (5),
une référence de longueur d'onde (24) ayant une longueur d'onde de résonance, à laquelle est couplée, lors du fonctionnement du dispositif, la partie (22) découplée du rayonnement de signal (4) ou du rayonnement idler (4),
un premier détecteur (39) qui est disposé de façon telle que, lors du fonctionnement du dispositif, il détecte l'intensité du rayonnement de signal (4) ou du rayonnement idler (4) réfléchi par la référence de longueur d'onde (24), ou du rayonnement de signal (4) ou du rayonnement idler (4) transmis par la référence de longueur d'onde (24), le premier détecteur (39) émettant un premier signal de détecteur (40),
un premier mélangeur (41) dans lequel, lors du fonctionnement du dispositif, le premier signal de détecteur (40) et le signal de référence (21) sont injectés et qui mélange le premier signal de détecteur (40) avec le signal de référence (21) et qui émet un premier signal d'erreur (42),
un premier régulateur proportionnel différentiel intégral (43) dans lequel, lors du fonctionnement du dispositif, le premier signal d'erreur (42) est injecté et qui engendre un premier signal de régulation (25) à partir du premier signal d'erreur (42),
lors du fonctionnement du dispositif, le premier signal de régulation (25) étant injecté dans l'actionneur (36) d'un miroir du résonateur de l'oscillateur paramétrique optique (3), si bien que, lors du fonctionnement du dispositif, la longueur du résonateur de l'oscillateur paramétrique optique (3) soit stabilisée à la longueur d'onde de résonance de la référence de longueur d'onde (24),
un agencement (44) qui est agencé et disposé de façon telle que, lors du fonctionnement du dispositif, il découple une partie (23) du rayonnement électromagnétique circulant dans le résonateur du dispositif optique non linéaire (5),
un deuxième détecteur (26) qui est disposé de façon telle que, lors du fonctionnement du dispositif, il détecte l'intensité du rayonnement électromagnétique (23) découplé du résonateur du dispositif optique non linéaire (5), le deuxième détecteur (26) émettant un deuxième signal de détecteur (45),
un deuxième mélangeur (46) dans lequel, lors du fonctionnement du dispositif, le deuxième signal de détecteur (45) est injecté, qui mélange le deuxième signal de détecteur (45) avec le signal de référence (21) et émet un deuxième signal d'erreur (47),
un deuxième régulateur proportionnel différentiel intégral (48) dans lequel, lors du fonctionnement du dispositif, le deuxième signal d'erreur (47) est injecté et qui engendre un deuxième signal de régulation (27) à partir du deuxième signal d'erreur (47),
lors du fonctionnement du dispositif, le deuxième signal de régulation (27) étant injecté dans l'actionneur (37) d'un miroir du résonateur du dispositif optique non linéaire (5), si bien que, lors du fonctionnement du dispositif, la longueur du résonateur du dispositif optique non linéaire (5) soit stabilisée à la longueur d'onde de résonance du résonateur de l'oscillateur paramétrique optique (3).

14. Procédé de génération de rayonnement électromagnétique avec les étapes
génération d'un rayonnement de pompage électromagnétique continu (2) à l'aide d'un laser de pompage (1),
génération d'un rayonnement de signal (4) ou d'un rayonnement idler (4) à partir du rayonnement de pompage (1) dans un oscillateur paramétrique optique (3) qui comprend un cristal optique non linéaire (11), et
génération d'un rayonnement électromagnétique (6) ayant une fréquence qui est supérieure à une fréquence du rayonnement de signal (4) ou du rayonnement idler (4), à partir du rayonnement de signal (4) ou du rayonnement idler (4), dans un dispositif optique non linéaire (5) qui comprend un cristal optique non linéaire (32),
**caractérisé en ce que**
le procédé comprend en outre les étapes
chauffer le cristal optique non linéaire (32) du dispositif optique non linéaire (5) dans un four, si bien que le cristal (32) présente un gradient de température dans la direction de faisceau du rayonnement de signal (4) ou du rayonnement idler (4), et
commander le gradient de température du cristal (32) du dispositif optique non linéaire (5) en fonction de la température du cristal (11) de l'oscillateur paramétrique optique (3) à l'aide d'une commande qui est reliée au four (16) et reliée à un capteur de température, le capteur de température étant agencé et disposé de façon telle que, lors du fonctionnement du dispositif, il capte une température du cristal (11) de l'oscillateur paramétrique optique (3).
